# EUROPEAN PATENT SPECIFICATION

(11) **EP 4 007 404 B1**
(45) Date of publication and mention of the grant of the patent: **04.09.2024**
(21) Application number: 20844473.7
(22) Date of filing: 13.07.2020
(51) Int. Cl.: H04W 72/04, H04L 1/1607, H04L 1/1829, H04L 5/00, H04W 72/21, H04L 1/1867

(54) **UCI TRANSMISSION AND RECEPTION METHODS AND APPARATUSES**
UCI-SENDE- UND EMPFANGSVERFAHREN UND GERÄTE
PROCÉDÉS DE TRANSMISSION ET DE RÉCEPTION D'UCI ET APPAREILS

(30) Priority: 25.07.2019 CN 201910678442
(43) Date of publication of application: 01.06.2022
(73) Proprietor: Datang Mobile Communications Equipment Co., Ltd., Beijing 100085 (CN)
(72) Inventor: GAO, Xuejuan, Beijing 100085 (CN)
(74) Representative: Cabinet Nony
(86) International application number: PCT/CN2020/101724
(87) International publication number: WO 2021/012980

(56) References cited:
- WO-A1-2020/145355
- WO-A2-2018/144382
- CN-A- 109 644 466
- QUALCOMM INCORPORATED: "UCI Enhancements for eURLLC", vol. RAN WG1, no. Reno, Nevada, U.S.A.; 20190513 - 20190517, 13 May 2019 (2019-05-13), XP051728722, Retrieved from the Internet <URL:http://www.3gpp.org/ftp/Meetings%5F3GPP%5FSYNC/RAN1/Docs/R1%2D1907282%2Ezip> [retrieved on 20190513]
- NOKIA ET AL: "On UCI Enhancements for NR URLLC", vol. RAN WG1, no. Reno, Nevada, US; 20190513 - 20190517, 13 May 2019 (2019-05-13), XP051728203, Retrieved from the Internet <URL:http://www.3gpp.org/ftp/Meetings%5F3GPP%5FSYNC/RAN1/Docs/R1%2D1906752%2Ezip> [retrieved on 20190513]
- SPREADTRUM COMMUNICATIONS: "Discussion on UCI enhancements for URLLC", vol. RAN WG1, no. Reno, USA; 20190513 - 20190517, 13 May 2019 (2019-05-13), XP051727808, Retrieved from the Internet <URL:http://www.3gpp.org/ftp/Meetings%5F3GPP%5FSYNC/RAN1/Docs/R1%2D1906358%2Ezip> [retrieved on 20190513]
- ERICSSON: "UCI Enhancements for NR URLLC", vol. RAN WG1, no. Reno, Nevada, USA; 20190513 - 20190517, 13 May 2019 (2019-05-13), XP051727549, Retrieved from the Internet <URL:http://www.3gpp.org/ftp/Meetings%5F3GPP%5FSYNC/RAN1/Docs/R1%2D1906092%2Ezip> [retrieved on 20190513]
- HUAWEI ET AL: "Text proposal on collision between sTTI and TTI", vol. RAN WG1, no. Athens, Greece; 20180226 - 20180302, 16 February 2018 (2018-02-16), XP051397035, Retrieved from the Internet <URL:http://www.3gpp.org/ftp/tsg%5Fran/WG1%5FRL1/TSGR1%5F92/Docs/> [retrieved on 20180216]
- VIVO: "UCI enhancements for URLLC", 3GPP TSG RAN WG1 #100 R1-2000326, 14 February 2020 (2020-02-14), XP051852815
- SPREADTRUM COMMUNICATIONS: "Discussion on UCI enhancements for URLLC", 3GPP TSG RAN WG1 #97 R1-1906358, 2 May 2019 (2019-05-02), XP051708393
- SPREADTRUM COMMUNICATIONS: "Discussion on UCI enhancements for URLLC", 3GPP TSG RAN WG1 #97 R1-1906358, 2 May 2019 (2019-05-02), XP051708393
- HUAWEI ET AL.: "Text proposal on collision between sTTI and TTI", 3GPP TSG RAN WG1 MEETING #92 R1-1801876, 16 February 2018 (2018-02-16), XP051397035
- CAICT: "UCI Enhancements for URLLC", 3GPP TSG RAN WG1 MEETING #97 R1-1907203, 3 May 2019 (2019-05-03), XP051709229

## Description

### Field

The present disclosure relates to the technical field of communication, in particular to a method for sending uplink control information, UCI, a method for receiving UCI and corresponding apparatuses.

### Background

With rapid development of communication technology, 5G new radio (NR) has entered people's life. While the new technology brings many delightful changes, it makes many previously defined standards not applicable any more. In 5G NR, Rel-16 will support the transmission of multiple time-division multiplexed physical uplink control channels (PUCCHs) in one slot carrying hybrid automatic repeat request-acknowledgement (HARQ-ACK).

Currently, in an NR system, a total of 5 PUCCH formats, namely 0, 1, 2, 3, and 4, are defined as NR formats. The PUCCH formats 0 and 1 can carry UCI transmission of 1 to 2 bits, and the PUCCH formats 2, 3 and 4 can carry UCI transmission of more than 2 bits. The HARQ-ACK can use any one of the 5 PUCCH formats. A scheduling request (SR) may be sent by using the PUCCH format 0 or 1, and a used PUCCH resource is configured by a high-level signaling. Channel state information (CSI) may be sent by using the PUCCH format 2, 3 or 4, and a used PUCCH resource is configured by a high-level signaling.

An NR R15 system only supports transmission of at most one PUCCH carrying HARQ-ACK in one slot. When a PUCCH carrying CSI/SR overlaps with the one PUCCH carrying the HARQ-ACK, a corresponding manner will be adopted for multiplexing transmission according to formats of the PUCCH carrying CSI/SR and the PUCCH carrying the HARQ-ACK.

When there are a plurality of PUCCHs in the one slot, and there is an overlap between the PUCCHs, that the PUCCHs in one slot constitute a set Q is assumed: an uplink channel with the earliest start time in the set Q is determined as a channel A, and a channel set X that overlaps with the channel A is determined; for UCI on the channel A and a channel X, multiplexing transmission is performed in accordance with the above multiplexing transmission rules to obtain a channel resource for multiplexing transmission, and this multiplexing transmission channel resource is used to replace the channel A and the channel X in the set Q; and the above steps are repeated to determine a channel A and a channel X in a new Q set, and so on, until a plurality of PUCCHs that do not overlap with each other in time domain are obtained.

The above-mentioned UCI transmission method is established on the NR R15 system. The NR R15 system only supports transmission of at most one PUCCH carrying the HARQ-ACK in one slot. In case of an overlap between the PUCCHs, only a situation exits that one PUCCH resource of the HARQ-ACK overlaps with a PUCCH resource of the CSI/SR, so only how to perform UCI multiplexing transmission when the one PUCCH carrying the CSI/SR overlaps with the PUCCH carrying the HARQ-ACK is defined.

Therefore, when there are a plurality of PUCCHs carrying the HARQ-ACK in one slot, there is no specified method for how to perform UCI transmission.

The document QUALCOMM INCORPORATED: "UCI Enhancements for eURLLC", 3GPP DRAFT; R1-1907282 discloses a PUCCH resource configuration and determination for eURLLC HARQ-ACK reporting. In general, the PUCCH resources to transmit HARQ-ACK feedback for eURLLC may be separately configured from those of eMBB PUCCH resources. For example, a sub-slot based PUCCH resource configuration and indication mechanism may be better suited for the sub-slot based HARQ-ACK reporting procedure discussed above. Whereas, the eMBB HARQ-ACK reporting may still follow the Rel-15 approach with slot based configuration. Furthermore, since eURLLC HARQ-ACK report is likely to have smaller payload size, it the number of PUCCH resource sets for eURLLC HARQ-ACK may be smaller than the number of PUCCH resource sets for eMBB.

The document HUAWEI ET AL: "Text proposal on collision between sTTI and TTl", 3GPP DRAFT; R1-1801876 discloses a proposal on collision between sTTI and TTI. For a serving cell, and a UE configured with higher layer parameter *ShortTTI-Length*, the UE is not expected to transmit subframe-based PUCCH in a given subframe if the UE is expected to transmit slot/subslot-based PUCCH including HARQ-ACK and/or CSI and SR if any on a slot/subslot of the same subframe. If the slot/subslot-based PUCCH contains valid SR resources. SR that was prepared as part of the subframe-based PUCCH transmission is transmitted on the slot/subslot-based PUCCH.

### Summary

Embodiments of the present disclosure provide methods for sending and receiving UCI and apparatus thereof, configured to solve the problem of how to perform UCI transmission when a plurality of PUCCHs carrying HARQ-ACK exist in one slot.

The invention is as defined in claims 1-16.

Because in the embodiments of the present disclosure, the terminal determines a PUCCH resource corresponding to UCI in a sub-slot according to the received configuration information, and sending the UCI according to the determined PUCCH resource, UCI transmission is achieved in Rel-16, thereby preventing an overlap between PUCCHs carrying HARQ-ACK and PUCCHs carrying CSI/SR in a TDM scheme.

### Brief Description of the Drawings

FIG. 1 is a schematic diagram of a UCI transmission method with multiple channels overlapping in the prior art.
FIG. 2 is a schematic diagram of a UCI transmission method with multiple channels overlapping in the prior art.
FIG. 3 is a flow chart of a Method for sending UCI provided by an embodiment of the present disclosure.
FIG. 4 is a flow chart of a method for receiving UCI provided by an embodiment of the present disclosure.
FIG. 5 is a schematic diagram of a UCI transmission method provided by an embodiment of the present disclosure described in a specific embodiment.
FIG. 6 is a schematic diagram of a UCI transmission method provided by an embodiment of the present disclosure described in a specific embodiment.
FIG. 7 is a schematic diagram of a UCI transmission method provided by an embodiment of the present disclosure described in a specific embodiment.
FIG. 8 is a schematic diagram of a UCI transmission method provided by an embodiment of the present disclosure described in a specific embodiment.
FIG. 9 is a schematic diagram of a UCI transmission method provided by an embodiment of the present disclosure described in a specific embodiment.
FIG. 10 is a schematic structural diagram of an apparatus for sending UCI provided by an embodiment of the present disclosure.
FIG. 11 is a schematic structural diagram of an apparatus for receiving provided by an embodiment of the present disclosure.
FIG. 12 is a schematic structural diagram of a terminal further provided by an embodiment of the present disclosure.
FIG. 13 is a schematic structural diagram of a base station further provided by an embodiment of the present disclosure.
FIG. 14 is a schematic structural diagram of a UCI transmission system provided by an embodiment of the present disclosure.

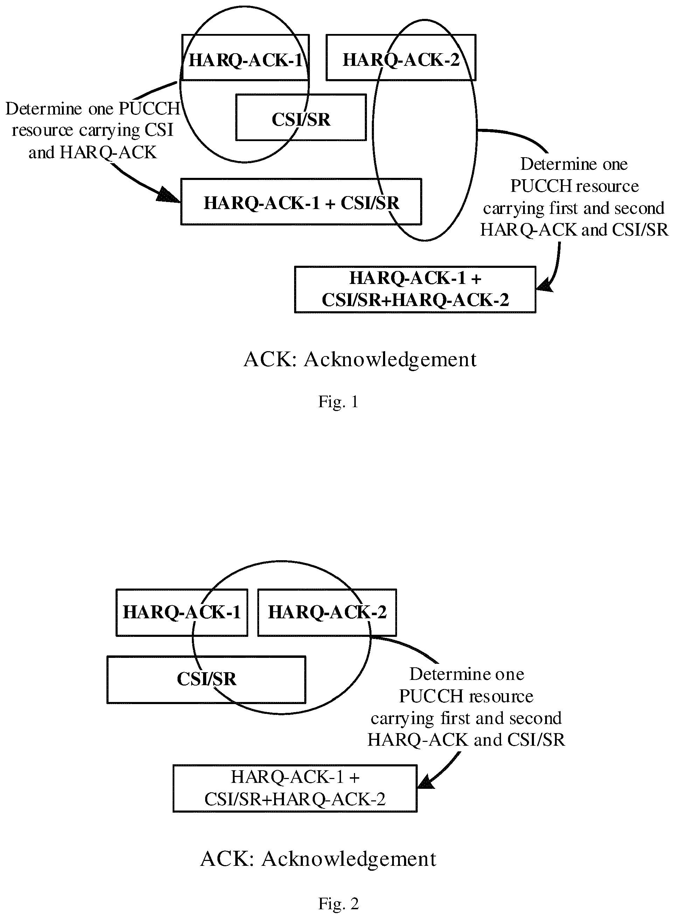

Figures 1, 2, 6, 7, 9 and 12-14 represent unclaimed aspects.

### Detailed Description of the Embodiments

In order to make the objectives, technical solutions, and advantages of the present disclosure clearer, the present disclosure will be further described in detail in conjunction with the accompanying drawings.

Rel-16 supports the transmission of multiple time-division multiplexed PUCCHs carrying HARQ-ACK. At the moment, the PUCCHs carrying the HARQ-ACK are sent in one sub-slot in one slot. Because the slot may contain a plurality of sub-slots, every sub-slot may transmit a PUCCH carrying the HARQ-ACK. When CSI and SR are still sent following a Rel-15 transmission mechanism, PUCCH resources of the CSI and the SR may occupy any symbol in the slot, so there may be an overlap between the multiple PUCCHs carrying the HARQ-ACK and a PUCCH carrying the SR/CSI. Should multiplexing transmission rules in R15 be adopted, specifically as shown in FIGS. 1 and 2, if two sub-slots transmit the PUCCHs carrying the HARQ-ACK and a PUCCH resource carrying the CSI/SR occupies a part of symbols in a first sub-slot and occupies a part of symbols in a second sub-slot, when multiplexing transmission is performed, a first overlap may be processed first, i.e. an overlap between a PUCCH carrying HARQ-ACK-1 and the PUCCH resource carrying the CSI/SR in the first sub-slot. According to the multiplexing transmission rules, a PUCCH resource for simultaneously carrying the CSI/SR and the HARQ-ACK may be determined, i.e. HARQ-ACK-1+CSI/SR, and this PUCCH resource may overlap with a PUCCH carrying a second HARQ-ACK. When this PUCCH resource overlaps with the PUCCH carrying the second HARQ-ACK, to further process the overlap, a PUCCH resource for simultaneously carrying the first and the second HARQ-ACK as well as the CSI/SR needs to be further determined, i.e. HARQ-ACK-1+CSI/SR+ HARQ-ACK-2. Or, the overlaps among the three PUCCHs may be directly processed, for example, the PUCCH resource for simultaneously carrying the first and the second HARQ-ACK as well as the CSI/SR is directly determined, i.e. HARQ-ACK-1+CSI/SR+ HARQ-ACK-2.

Adopting the multiplexing transmission rules in R15 may result in that transmission of a plurality of HARQ-ACKs which do not originally overlap in time domain resource need to be multiplexed in one same PUCCH for simultaneous transmission, because the transmission of a plurality of HARQ-ACKs overlaps with the CSI/SR in time domain, which will affect the transmission performance of the HARQ-ACKs. On the one hand, two HARQ-ACKs are sent on one same PUCCH, and at least one of the HARQ-ACKs needs to be transferred, or the two HARQ-ACKs may need to be transferred. If a transferred resource is longer in transmission time or later in start moment compared with an original resource, it will result in an increase of time delay of the HARQ-ACKs subjected to multiplexing transmission compared with original HARQ-ACK transmission. If a code rate of a PUCCH carrying both HARQ-ACKs is increased compared with a code rate of PUCCH for originally transmitting a single HARQ-ACK, it will result in that the transmission performance of the HARQ-ACKs subjected to multiplexing transmission is reduced compared with original HARQ-ACK transmission.

Embodiments of the present disclosure provide a method for sending or receiving UCI and apparatus thereof, a system, a device and a medium, configured to solve the problem of how to perform UCI transmission when a plurality of PUCCHs carrying HARQ-ACK exist in one slot.

### Embodiment 1

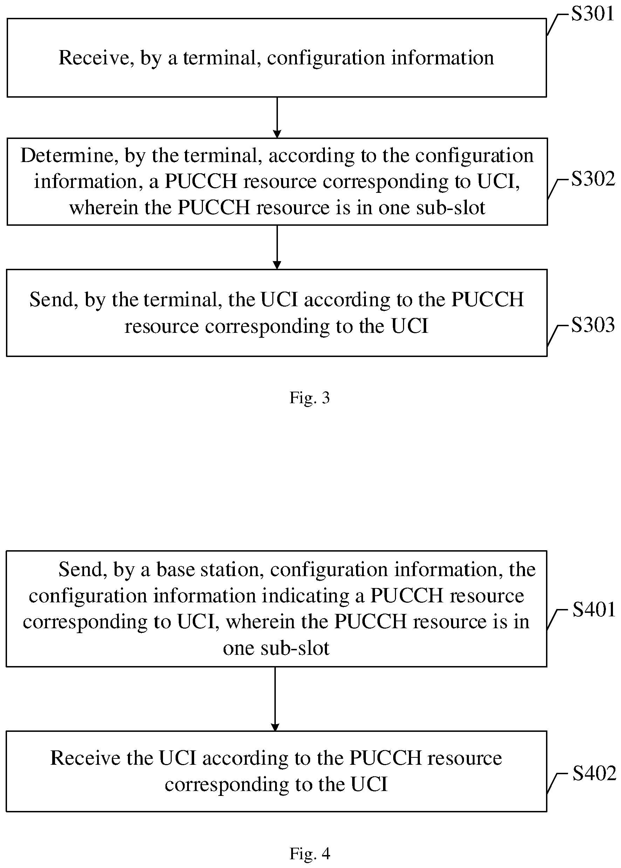

FIG. 3 is a method for sending UCI provided by an embodiment of the present disclosure. The method includes the following steps.

S301: a terminal receives configuration information.

The method for sending the UCI provided by the embodiment of the present disclosure is applied to the terminal. The terminal receives the configuration information sent by a network side device, and the network side device is preferably a base station.

The configuration information is a high-layer signaling, downlink control information (DCI), or a media access control (MAC) control element (CE), which is not specifically limited in the embodiment of the present disclosure. The base station and the terminal may be agreed in advance, or be configured through a protocol.

S302: a PUCCH resource corresponding to UCI is determined according to the configuration information. The PUCCH resource is in one sub-slot.

The UCI includes: at least one of HARQ-ACK, CSI or SR. In particular, the UCI may include only the HARQ-ACK, the CSI or the SR. Because the embodiment of the present disclosure solves the problem of how to perform UCI transmission when there is an overlap in time domain between a plurality of PUCCHs carrying HARQ-ACK and PUCCHs carrying SR/CSI, situations may exit that the UCI includes the HARQ-ACK and the CSI at the same time, or includes the HARQ-ACK and the SR at the same time, or includes the CSI and the SR at the same time, or includes the HARQ-ACK, the CSI and the SR at the same time.

In the embodiment of the present disclosure, the one sub-slot is a pre-defined or configured time unit with a fixed quantity of symbols in one slot, and an order of sub-slots within the one slot, a position of each sub-slot, and a quantity of symbols contained in each sub-slot are pre-defined or configured.

The quantities of symbols contained in different sub-slots within the one slot are equal, or unequal. In other words, in all sub-slots contained in the one same slot, the quantities of symbols contained in the respective sub-slots may be equal, for example, there are 7 sub-slots each containing 2 symbols, and of course, the quantities of the symbols contained in the respective sub-slots may be different, for example, a first sub-slot contains 4 symbols, and a second sub-slot contains 3 symbols, but the specific quantities of the symbols may be determined through advance agreement or configuration.

In the embodiment of the present disclosure, the PUCCH resource being in the one sub-slot includes: the PUCCH resource does not cross a boundary of one sub-slot; or a start symbol and an end symbol of the PUCCH resource are in the one same sub-slot; or a quantity of symbols of the PUCCH resource does not exceed a quantity of symbols contained in one sub-slot.

In the condition that different sub-slots contain different quantities of symbols, the quantity of the symbols of the PUCCH resource does not exceed the quantity of symbols contained in a sub-slot containing the largest quantity of symbols.

S303: the UCI is sent according to the PUCCH resource corresponding to the UCI.

After the PUCCH resource corresponding to the UCI is determined, the UCI may be sent according to the PUCCH resource. For a specific process of performing UCI transmission according to the PUCCH resource, those of skill in the art can determine the specific transmission process based on description of the embodiment of the present disclosure, which will not be repeated here.

In the embodiment of the present disclosure, the terminal determines the PUCCH resource corresponding to the UCI in one sub-slot according to the received configuration information, and performs transmission of the UCI according to the determined PUCCH resource, so UCI transmission is achieved in Rel-16, thereby preventing an overlap between PUCCHs carrying HARQ-ACK and PUCCHs carrying CSI/SR in a TDM scheme.

### Embodiment 2

To achieve UCI transmission in Rel-16, according to the above embodiment, in the embodiment of the present disclosure, sending the UCI according to a PUCCH resource corresponding to UCI includes the following.

In the condition that the PUCCH resource corresponding to the UCI does not overlap with and other uplink channels in time domain, the UCI is sent on the PUCCH resource corresponding to the UCI.

That is, the PUCCH resource corresponding to the UCI does not overlap with the other uplink channels in time domain, multiplexing transmission does not exit, so the UCI may be directly sent on the PUCCH resource corresponding to the UCI.

The sending the UCI according to the PUCCH resource corresponding to the UCI includes the following.

For any one sub-slot, in the condition that a PUCCH resource corresponding to first UCI in the any one sub-slot overlaps in at least one symbol with a PUCCH resource corresponding to second UCI, a PUCCH resource for sending the first UCI and the second UCI is determined, and the PUCCH resource for sending the first UCI and the second UCI is in one sub-slot; and the first UCI and the second UCI are sent on the determined PUCCH resource.

That is, in a sub-slot n, in the condition that a PUCCH resource corresponding to one kind of UCI overlaps in at least one symbol with a PUCCH resource corresponding to other UCI, a PUCCH resource for simultaneously sending the UCI and the other UCI is determined, and the PUCCH resource for simultaneously sending the UCI and the other UCI is in the sub-slot n as well, so that it is ensured that when the UCI and the other UCI are sent on the determined PUCCH resource, there will be no overlap with a PUCCH in other sub-slots.

Specifically, when one kind of UCI is CSI/SR, and the other kind of UCI is HARQ-ACK, and a PUCCH carrying the CSI/SR overlaps with a PUCCH carrying the HARQ-ACK, multiplexing transmission may be performed according to the following method (i.e. the PUCCH resource for simultaneously sending the UCI and the other UCI is determined according to the following method).

When the PUCCH carrying the SR overlaps with the PUCCH carrying the HARQ-ACK, and the PUCCH carrying the HARQ-ACK uses a PUCCH format 0 (the PUCCH carrying the SR may use the format 0 and may also use a format 1), multiplexing transmission of the SR and the HARQ-ACK is performed on the PUCCH resource of the HARQ-ACK, i.e. through using different cyclic shifts (CSs) for transmitting the HARQ-ACK on the PUCCH resource of the HARQ-ACK, whether the SR is positive or negative is implicitly expressed; and in other words, at the moment, the PUCCH resource for simultaneously transmitting the SR and the HARQ-ACK is determined as the PUCCH resource corresponding to the HARQ-ACK.

When the PUCCH carrying the SR overlaps with the PUCCH carrying the HARQ-ACK, the PUCCH carrying the SR uses the format 0, and the PUCCH carrying the HARQ-ACK uses the format 1, the SR is discarded; and in other words, multiplexing transmission is not performed at the moment.

When the PUCCH carrying the SR overlaps with the PUCCH carrying the HARQ-ACK, the PUCCH carrying the SR uses the format 1, and the PUCCH carrying the HARQ-ACK uses the format 1, and when positive SR exists, the HARQ-ACK is sent on the PUCCH resource of the SR, so simultaneous existence of SR transmission is implicitly expressed; otherwise, negative SR exists, and the HARQ-ACK is sent on the PUCCH resource of the HARQ-ACK. In other words, at the moment, the PUCCH resource for simultaneously transmitting the SR and the HARQ-ACK is determined as the PUCCH resource corresponding to the SR.

When the PUCCH carrying the SR overlaps with the PUCCH carrying the HARQ-ACK, and the PUCCH carrying the HARQ-ACK uses a PUCCH format 2/3/4 (the PUCCH carrying the SR may use the format 0 and may also use the format 1), a PUCCH resource set is determined according to the total quantity of bits of the SR and the HARQ-ACK. According to a PUCCH resource indication field in DCI corresponding to the HARQ-ACK, one PUCCH resource for simultaneous transmission of the SR and the HARQ-ACK is determined in the determined PUCCH resource set, where the SR is of X bits, SR state in a plurality of SRs overlapping with the HARQ-ACK is expressed (expressing positive ones, or expressing that all SRs are negative), and regardless of whether the SRs are positive or negative, X bits of the SR is sent, so as to avoid that the SR state causes a change of UCI bits sent on the PUCCH resource of the HARQ-ACK. In other words, at the moment, the PUCCH resource for simultaneously transmitting the SR and the HARQ-ACK is determined as a PUCCH resource determined according to the total quantity of bits of the SR and the HARQ-ACK, and the PUCCH resource may be the same as or different from (i.e. a new PUCCH resource) the original PUCCH resource carrying the HARQ-ACK.

When a PUCCH carrying SPS HARQ-ACK (i.e. HARQ-ACK corresponding to SPS PDSCH) overlaps with the PUCCH carrying the CSI, the SPS HARQ-ACK is transferred to the PUCCH resource corresponding to the CSI for multiplexing transmission with the CSI. In other words, a PUCCH resource for simultaneously transmitting the CSI and the HARQ-ACK is determined as the PUCCH resource corresponding to the CSI.

When a PUCCH carrying dynamic HARQ-ACK (i.e. HARQ-ACK corresponding to PDSCH having corresponding DCI scheduling or corresponding to DCI indicating release of downlink SPS PDSCH) overlaps with the PUCCH carrying the CSI, a PUCCH resource set is selected from a plurality of PUCCH resource sets according to the total number of bits of the HARQ-ACK and the CSI. According to a PUCCH resource indication field in the DCI corresponding to the HARQ-ACK, a PUCCH resource for simultaneously carrying the HARQ-ACK and the CSI is determined from the selected PUCCH resource set. In other words, the PUCCH resource for simultaneously transmitting the CSI and the HARQ-ACK is determined as a PUCCH resource determined based on the total number of bits of the CSI and the HARQ-ACK, and the PUCCH resource may be the same as or different from (i.e. the PUCCH resource is a new PUCCH resource) the original PUCCH resource carrying the HARQ-ACK.

If there is an overlap among the HARQ-ACK, the SR and the CSI at the same time, the above solution is combined.

When the kind of the UCI is CSI, the other kind of UCI is the SR, and the PUCCH carrying the CSI overlaps with the PUCCH carrying the SR, multiplexing transmission may be performed according to the following method (i.e. the PUCCH resource for simultaneously transmitting the UCI and the other UCI is determined according to the following method).

When the PUCCH carrying the SR overlaps with the PUCCH carrying the CSI, the SR is transferred to the PUCCH resource corresponding to the CSI for multiplexing transmission with the CSI; and in other words, the PUCCH resource for simultaneously transmitting the CSI and the SR is determined as the PUCCH resource corresponding to the CSI.

In the embodiment of the present disclosure, for any one sub-slot, in the condition that a PUCCH resource corresponding to first UCI in the any one sub-slot overlaps in at least one symbol with a PUCCH resource corresponding to second UCI, a PUCCH resource for simultaneously transmitting the first UCI and the second UCI is determined according to the above method, provided that the determined PUCCH resource for simultaneously transmitting the first UCI and the second UCI should be in the sub-slot, and the first UCI and the second UCI are sent on the determined PUCCH resource.

### Embodiment 3

FIG. 4 is a method for receiving UCI provided by an embodiment of the present disclosure. The method includes the following.

S401, a base station sends configuration information. The configuration information indicates a PUCCH resource corresponding to UCI, and the PUCCH resource is in one sub-slot.

The method for receiving the UCI provided by the embodiment of the present disclosure is applied to the base station. The base station sends the configuration information to a terminal side, and the configuration information is a high-level signaling, or DCI, or MACCE, which is not specifically limited in the embodiment of the present disclosure.

Correspondingly, the UCI includes: at least one of HARQ-ACK, CSI or SR.

Further, one sub-slot is a pre-defined or configured time unit with a fixed quantity of symbols in one slot, and an order of sub-slots within the one slot, a position of each sub-slot, and a quantity of symbols contained in each sub-slot are pre-defined or configured.

The quantities of symbols contained in different sub-slots within the slot are equal, or unequal.

Preferably, the PUCCH resource being in the one sub-slot includes: the PUCCH resource does not cross a boundary of one sub-slot; or a start symbol and an end symbol of the PUCCH resource are in the one same sub-slot; or a quantity of symbols of the PUCCH resource does not exceed the quantity of symbols contained in one sub-slot.

In the condition that different sub-slots contain different quantities of symbols, the quantity of the symbols of the PUCCH resource does not exceed the quantity of symbols contained in a sub-slot with the largest quantity of symbols.

S402, the UCI is received according to the PUCCH resource corresponding to the UCI.

After the PUCCH resource corresponding to the UCI is determined, the UCI may be received according to the PUCCH resource. For a specific process of performing UCI reception according to the PUCCH resource, those of skill in the art can determine the specific reception process based on description of the embodiment of the present disclosure, which will not be repeated here.

In the embodiment of the present disclosure, the base station determines the PUCCH resource corresponding to the UCI in the sub-slot according to the configuration information, and performs reception of the UCI according to the determined PUCCH resource, so UCI reception is achieved in Rel-16, thereby preventing an overlap between PUCCHs carrying HARQ-ACK and PUCCHs carrying CSI/SR in a TDM scheme.

### Embodiment 4

To achieve UCI reception in Rel-16, according to the above embodiment, in the embodiment of the present disclosure, receiving the UCI according to a PUCCH resource corresponding to UCI includes the following.

In the condition that the PUCCH resource corresponding to the UCI does not overlap with other uplink channels in time domain, the UCI is received on the PUCCH resource corresponding to the UCI.

That is, in the condition that the PUCCH resource corresponding to the UCI does not overlap with the other uplink channels in time domain, multiplexing transmission does not exit, so the UCI may be directly received on the PUCCH resource corresponding to the UCI.

The receiving the UCI according to the PUCCH resource corresponding to the UCI includes the following.

For any one sub-slot, in the condition that a PUCCH resource corresponding to first UCI in the any one sub-slot overlaps in at least one symbol a PUCCH resource corresponding to second UCI, a PUCCH resource for receiving the first UCI and the second UCI is determined, and the PUCCH resource for receiving the first UCI and the second UCI is in one sub-slot; and the first UCI and the second UCI are received on the determined PUCCH resource.

That is, in a sub-slot n, in the condition that a PUCCH resource corresponding to one kind of UCI overlaps with a PUCCH resource corresponding to other UCI in at least one symbol, a PUCCH resource for simultaneously receiving the UCI and the other UCI is determined, and the PUCCH resource for simultaneously receiving the UCI and the other UCI is in the sub-slot n as well, so that it is ensured that when the UCI and the other UCI are received on the determined PUCCH resource, there will be no overlap with a PUCCH in other sub-slots.

A process for sending and receiving the UCI provided by the embodiment of the present disclosure is described through specific embodiments below.

Assuming that two sub-slots are defined in a slot, and that each sub-slot corresponds to 7 symbols, when a base station configures a PUCCH resource corresponding to CSI and SR to a terminal, the determined PUCCH resource is in one sub-slot. For example, a PUCCH resource occupying 4 symbols for transmitting the SR is configured in the first sub-slot, and a PUCCH resource occupying 7 symbols for transmitting the CSI is configured in the second sub-slot, which is informed of to the terminal through configuration information; and the terminal may determine that the PUCCH resources corresponding to the SR and the CSI do not cross a boundary of the sub-slot. Such configuration may ensure that, if a PUCCH carrying HARQ-ACK exists in each sub-slot, the PUCCH resource of the SR does not simultaneously overlap with the two PUCCH resources transmitting the HARQ-ACK in a TDM scheme.

For example, in the first sub-slot, the SR overlaps with the HARQ-ACK in time domain resource, and a multiplexing transmission mechanism is adopted by following.

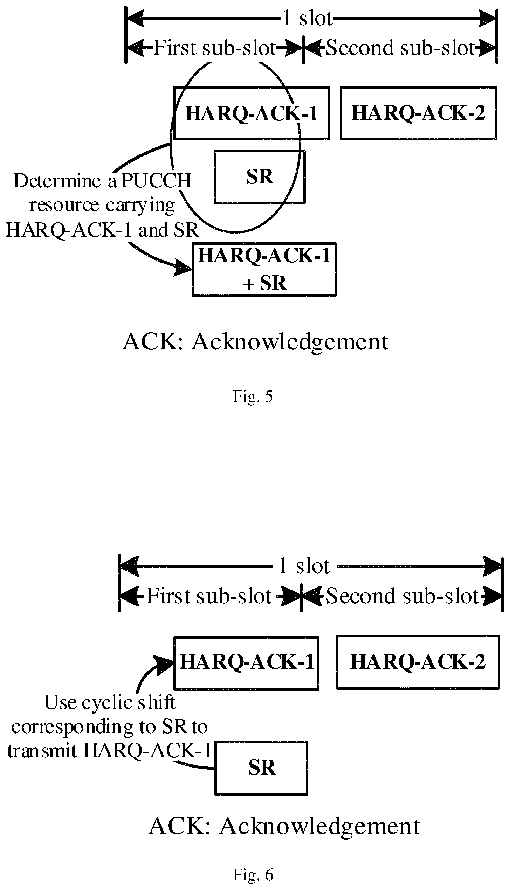

When the PUCCH carrying the HARQ-ACK adopts a PUCCH format 2/3/4, specifically as shown in FIG. 5, a PUCCH resource set is determined according to the total quantity of bits of the SR and the HARQ-ACK. According to a PUCCH resource indication field in DCI corresponding to the HARQ-ACK, a PUCCH resource for simultaneous transmission of the HARQ-ACK and the SR is determined in the determined PUCCH resource set. The resource may be the same as or different from an original HARQ-ACK resource. If the resource is the same as the original HARQ-ACK resource, the PUCCH finally carrying the SR and the HARQ-ACK does not cross the boundary of the sub-slot, and will not overlap with a PUCCH of HARQ-ACK-2, so multiplexing transmission of two HARQ-ACKs which do not originally overlap will not be caused. If the resource is different from the original HARQ-ACK resource, by limiting the resource to be contained in a sub-slot where original transmission of HARQ-ACK-1 is located, i.e. the first sub-slot, an overlap with the PUCCH of the HARQ-ACK-2 is avoided as well, so multiplexing transmission of the two HARQ-ACKs which do not originally overlap will not be caused.

When the PUCCH carrying the HARQ-ACK uses a PUCCH format 0, the multiplexing transmission mechanism is shown as FIG. 6. When positive SR exists, the HARQ-ACK is sent on the PUCCH resource corresponding to the HARQ-ACK by adopting a cyclic shift corresponding to the positive SR, so simultaneous existence of positive SR transmission is implicitly expressed, and the PUCCH finally carrying the SR and the HARQ-ACK is the original PUCCH corresponding to the HARQ-ACK-1 and will not cross the boundary of the sub-slot. Therefore, the PUCCH will not overlap with the PUCCH of the HARQ-ACK-2, and multiplexing transmission of the two HARQ-ACKs which do not originally overlap will not be caused.

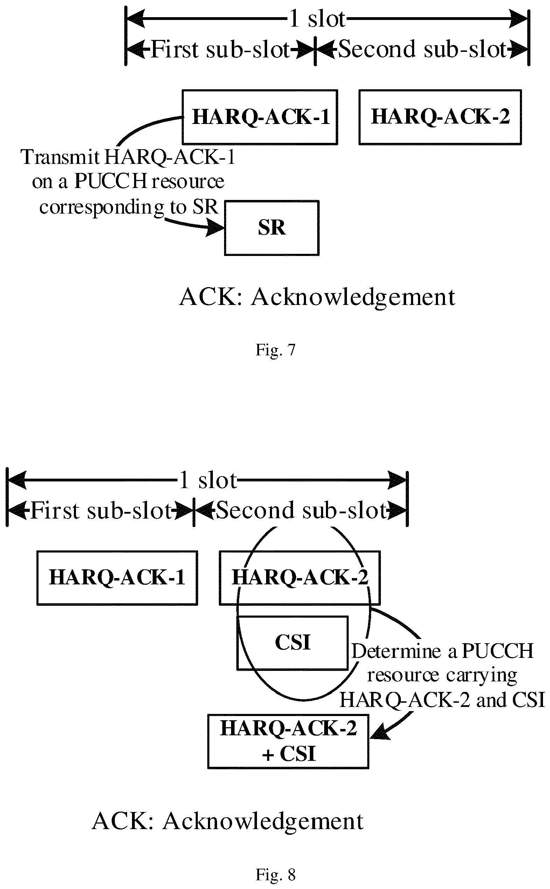

When both the PUCCH carrying the HARQ-ACK and the PUCCH carrying the SR adopt a PUCCH format 1, the multiplexing transmission mechanism is shown as FIG. 7. When positive SR exists, the HARQ-ACK is sent on the PUCCH resource corresponding to the SR, simultaneous existence of positive SR transmission is implicitly expressed by using the resource of the SR for transmission, and the PUCCH finally carrying the SR and the HARQ-ACK-1 is the PUCCH corresponding to the SR and will not cross the boundary of the sub-slot. Therefore, the PUCCH will not overlap with the PUCCH of the HARQ-ACK-2, and multiplexing transmission of the two HARQ-ACKs which do not originally overlap will not be caused.

In the second sub-slot, the CSI overlaps with the HARQ-ACK in time domain resource, and a multiplexing transmission mechanism is adopted as below.

When a plurality of PUCCH resource sets are configured, and the HARQ-ACK is a t HARQ-ACK for downlink transmission with corresponding DCI, regardless of whether the PUCCH adopts the PUCCH format 2/3/4 or format 0/1, the multiplexing transmission mechanism is shown as FIG. 8. A PUCCH resource set is determined according to the total quantity of bits of the CSI and the HARQ-ACK-2. According to a PUCCH resource indication field in the DCI corresponding to the HARQ-ACK-2, one PUCCH resource for simultaneously transmitting the HARQ-ACK-2 and the CSI is determined in the selected PUCCH resource set. This one PUCCH resource may be the same as or different from the original HARQ-ACK-2 resource. If the resource is the same as the original HARQ-ACK-2 resource, the PUCCH finally carrying the CSI and the HARQ-ACK-2 will not cross the boundary of the sub-slot, and will not overlap with the PUCCH of the HARQ-ACK-1, so multiplexing transmission of two HARQ-ACKs which do not originally overlap will not be caused. If the resource is different from the original HARQ-ACK-2 resource, by limiting the resource to be contained in a sub-slot where original transmission of HARQ-ACK-2 is located, i.e. the second sub-slot, an overlap with the PUCCH of the HARQ-ACK-1 is avoided as well, so multiplexing transmission of the two HARQ-ACKs which do not originally overlap will not be caused.

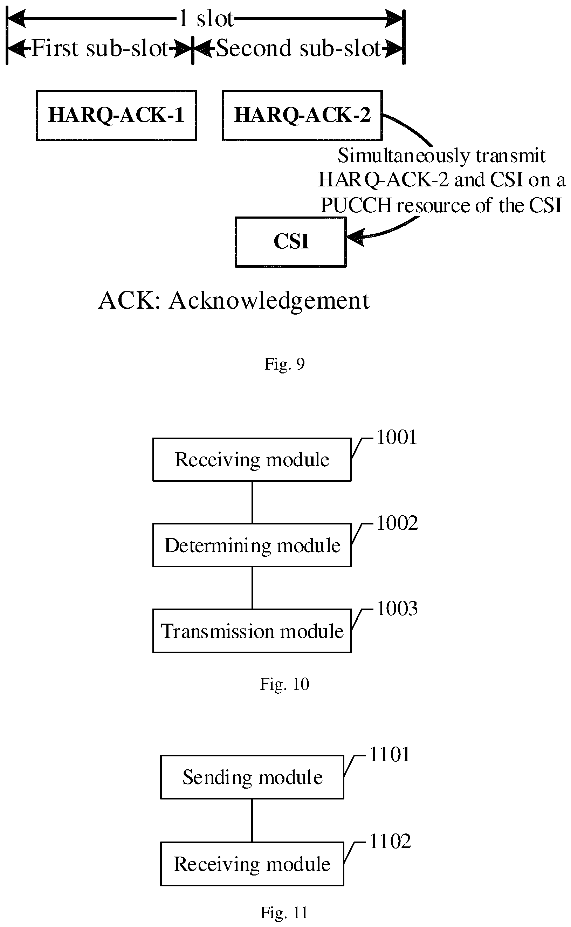

When the HARQ-ACK is HARQ-ACK corresponding to SPS PDSCH, the HARQ-ACK is simultaneously sent together with the CSI on the PUCCH resource corresponding to the CSI, and the multiplexing transmission mechanism is shown as FIG. 9. The PUCCH resource finally carrying the CSI and the HARQ-ACK-2 is a PUCCH resource corresponding to the CSI and will not cross the boundary of the sub-slot. Therefore, the PUCCH will not overlap with the PUCCH of the HARQ-ACK-1, and multiplexing transmission of the two HARQ-ACKs which do not originally overlap will not be caused.

A terminal side determines multiplexing transmission resources according to the above method, so the UCI is sent on corresponding resources in the first sub-slot and the second sub-slot; and a base station side determines multiplexing transmission resources according to the above method, so the UCI is received on corresponding resources in the first sub-slot and the second sub-slot.

It should be noted that, the above slot being divided into two sub-slots only serves an example. The slot may further be divided into other quantities of sub-slots and sub-slot lengths. For example, it may be divided into 7 sub-slots, each sub-slot containing 2 symbols, or be divided into 4 sub-slots, two of which each contain 3 symbols and two of which each contain 4 symbols, etc.

### Embodiment 5

FIG. 10 is a schematic structural diagram of a UCI transmission apparatus provided by an embodiment of the present disclosure. The apparatus includes: a receiving module 1001, configured to receive configuration information; a determining module 1002, configured to determine a PUCCH resource corresponding to UCI according to the configuration information, wherein the PUCCH resource is in one sub-slot; and a sending module 1003, configured to send the UCI according to the PUCCH resource corresponding to the UCI.

The configuration information is a high-level signaling, DCI, or MAC CE, and the UCI includes: at least one of HARQ-ACK, CSI or SR.

Further, the sub-slot is a pre-defined or configured time unit with a fixed quantity of symbols in a slot, and an order of sub-slots within the slot, a position of each sub-slot, and a quantity of symbols contained in each sub-slot are pre-defined or configured.

The quantities of symbols contained in different sub-slots within the slot are equal, or unequal.

Correspondingly, the PUCCH resource being in the sub-slot includes: the PUCCH resource does not cross a boundary of the sub-slot; or a start symbol and an end symbol of the PUCCH resource are in the same sub-slot; or a quantity of symbols of the PUCCH resource does not exceed the quantity of symbols contained in the sub-slot.

In the condition that different sub-slots contain different quantities of symbols, the quantity of the symbols of the PUCCH resource does not exceed the quantity of symbols contained in one sub-slot with the largest quantity of symbols.

Preferably, the sending module 1003 is further configured to send, in the condition that the PUCCH resource corresponding to the UCI does not overlap with other uplink channels in time domain, the UCI on the PUCCH resource corresponding to the UCI.

The sending module 1003 is further configured to determine, for any one sub-slot, in the condition that a PUCCH resource corresponding to first UCI in the any one sub-slot overlaps in at least one symbol with a PUCCH resource corresponding to second UCI, a PUCCH resource for sending the first UCI and the second UCI, and the PUCCH resource for sending the first UCI and the second UCI is in one sub-slot; and the first UCI and the second UCI are sent on the determined PUCCH resource.

### Embodiment 6

FIG. 11 is a schematic structural diagram of an apparatus for receiving UCI further provided by an embodiment of the present disclosure. The apparatus includes: a sending module 1101, configured to send configuration information, wherein the configuration information is configured to indicate a PUCCH resource corresponding to UCI and the PUCCH resource being in one sub-slot; and a receiving module 1102, configured to receive the UCI according to the PUCCH corresponding to the UCI.

The configuration information is a high-level signaling, DCI, or MAC CE, and the UCI includes: at least one of HARQ-ACK, CSI or SR.

Further, the sub-slot is a pre-defined or configured time unit with a fixed quantity of symbols in a slot, and an order of sub-slots within the slot, a position of each sub-slot, and the quantity of symbols contained in each sub-slot are pre-defined or configured.

The quantities of symbols contained in different sub-slots within the slot are equal, or unequal.

Correspondingly, the PUCCH resource being in the sub-slot includes: the PUCCH resource does not cross a boundary of the sub-slot; or a start symbol and an end symbol of the PUCCH resource are in the same sub-slot; or the quantity of symbols of the PUCCH resource does not exceed the quantity of symbols contained in the sub-slot.

In the condition that different sub-slots contain different quantities of symbols, the quantity of the symbols of the PUCCH resource does not exceed the quantity of symbols contained in one sub-slot with the largest quantity of symbols.

Preferably, the receiving module 1102 is further configured to receive, in the condition that the PUCCH resource corresponding to the UCI does not overlap with other uplink channels in time domain, the UCI on the PUCCH resource corresponding to the UCI.

The receiving module 1102 is further configured to determine, for any one sub-slot, in the condition that a PUCCH resource corresponding to first UCI in the any one sub-slot overlaps in at least one symbol with a PUCCH resource corresponding to second UCI, a PUCCH resource for receiving the first UCI and the second UCI, and the PUCCH resource for receiving the first UCI and the second UCI is in one sub-slot; and the first UCI and the second UCI are received on the determined PUCCH resource.

### Embodiment 7

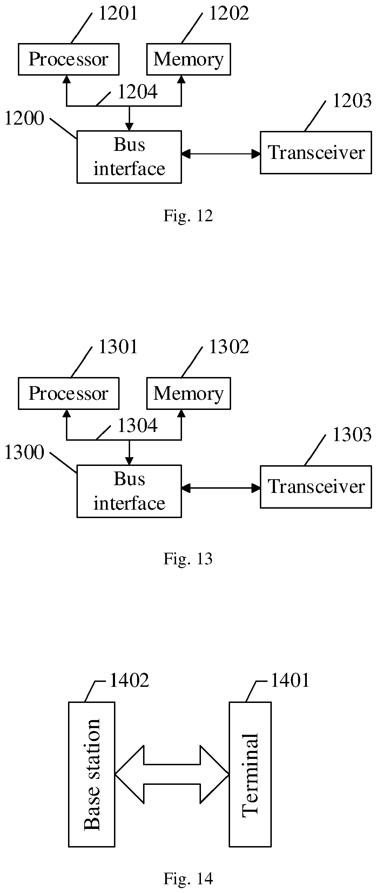

FIG. 12 is a schematic structural diagram of a terminal further provided by an embodiment of the present disclosure. The terminal includes: a processor 1201, a memory 1202, a transceiver 1203 and a bus interface 1200.

The processor 1201 is responsible for managing a bus architecture and general processing, and the memory 1202 may store data used by the processor 1201 when performing operations. The transceiver 1203 is configured to receive and send the data under control of the processor 1201.

The bus architecture may include any quantity of interconnected buses and bridges. Specifically, one or more processors represented by the processor 1201 and various circuits of a memory represented by the memory 1202 are linked together. The bus architecture may also link various other circuits such as peripheral devices, voltage regulators, power management circuits, etc. These are all known in the art, and therefore, no further description will be given herein. The bus interface provides an interface. The processor 1201 is responsible for managing the bus architecture and general processing, and the memory 1202 may store the data used by the processor 1201 when performing operations.

The processes disclosed in the embodiment of the present disclosure may be applied in the processor 1201 or implemented by the processor 1201. In an implementation process, each step of a signal processing flow may be completed by an integrated logic circuit of hardware in the processor 1201 or instructions in the form of software. The processor 1201 may be a general-purpose processor, a digital signal processor, an application specific integrated circuit, a field programmable gate array or other programmable logic device, a discrete gate or transistor logic device, or a discrete hardware component, and may implement or execute disclosed methods, steps and logic block diagrams in the embodiments of the present disclosure. The general-purpose processor may be a microprocessor or any conventional processor or the like. The steps of the methods disclosed in the embodiments of the present disclosure may be directly embodied as executed and completed by a hardware processor, or executed and completed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory 1202, and the processor 1201 reads information in the memory 1202, and completes the steps of the signal processing flow in combination with its hardware.

Specifically, the processor 1201 is configured to read a program in the memory 1202 to: receive configuration information; determine a PUCCH resource corresponding to UCI according to the configuration information, wherein the PUCCH resource is in one sub-slot; and send the UCI according to the PUCCH resource corresponding to the UCI.

The configuration information is a high-level signaling, DCI, or MAC CE, and the UCI includes: at least one of HARQ-ACK, CSI or SR.

The sub-slot is a pre-defined or configured time unit with a fixed quantity of symbols in a slot, and an order of sub-slots within the slot, a position of each sub-slot, and the quantity of symbols contained in each sub-slot are pre-defined or configured.

The quantities of symbols contained in different sub-slots within the slot are equal, or unequal.

Correspondingly, the PUCCH resource being in the sub-slot includes: the PUCCH resource does not cross a boundary of the sub-slot; or a start symbol and an end symbol of the PUCCH resource are in the same sub-slot; or the quantity of symbols of the PUCCH resource does not exceed the quantity of symbols contained in the sub-slot.

In the condition that different sub-slots contain different quantities of symbols, the quantity of the symbols of the PUCCH resource does not exceed the quantity of symbols contained in one sub-slot with the largest quantity of symbols.

Preferably, the sending the UCI according to the PUCCH resource corresponding to the UCI includes the following.

In the condition that the PUCCH resource corresponding to the UCI does not overlap with other uplink channels in time domain, the UCI is sent on the PUCCH resource corresponding to the UCI.

The sending the UCI according to the PUCCH resource corresponding to the UCI includes the following.

For any one sub-slot, in the condition that a PUCCH resource corresponding to first UCI in the any one sub-slot overlaps in at least one symbol with a PUCCH resource corresponding to second UCI, a PUCCH resource for sending the first UCI and the second UCI is determined, and the PUCCH resource for sending the first UCI and the second UCI is in one sub-slot; and the first UCI and the second UCI are sent on the determined PUCCH resource.

### Embodiment 8

FIG. 13 is a schematic structural diagram of a base station further provided by an embodiment of the present disclosure. The base station includes: a processor 1301, a memory 1302, and a transceiver 1303.

The processor 1301 is responsible for managing a bus architecture and general processing, and the memory 1302 may store data used by the processor 1301 when performing operations. The transceiver 1303 is configured to receive and send the data under control of the processor 1301.

The bus architecture may include any quantity of interconnected buses and bridges. Specifically, one or more processors represented by the processor 1301 and various circuits of a memory represented by the memory 1302 are linked together. The bus architecture may also link various other circuits such as peripheral devices, voltage regulators, power management circuits, etc. These are all known in the art, and therefore, no further description will be given herein. The bus interface provides an interface. The processor 1301 is responsible for managing the bus architecture and general processing, and the memory 1302 may store the data used by the processor 1301 when performing operations.

The processes disclosed in the embodiment of the present disclosure may be applied in the processor 1301 or implemented by the processor 1301. In an implementation process, each step of a signal processing flow may be completed by an integrated logic circuit of hardware in the processor 1301 or instructions in the form of software. The processor 1301 may be a general-purpose processor, a digital signal processor, an application specific integrated circuit, a field programmable gate array or other programmable logic device, a discrete gate or transistor logic device, or a discrete hardware component, and may implement or execute disclosed methods, steps and logic block diagrams in the embodiments of the present disclosure. The general-purpose processor may be a microprocessor or any conventional processor or the like. The steps of the methods disclosed in the embodiments of the present disclosure may be directly embodied as executed and completed by a hardware processor, or executed and completed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory 1302, and the processor 1301 reads information in the memory 1302, and completes the steps of the signal processing flow in combination with its hardware.

Specifically, the processor 1301 is configured to read a program in the memory 1302 to: send configuration information, wherein the configuration information is configured to indicate a PUCCH resource corresponding to UCI, and the PUCCH resource is in one sub-slot; and receive UCI according to the PUCCH resource corresponding to the UCI.

The configuration information is a high-level signaling, DCI, or MAC CE, and the UCI includes: at least one of HARQ-ACK, CSI or SR.

The sub-slot is a pre-defined or configured time unit with a fixed quantity of symbols in a slot, and an order of sub-slots within the slot, a position of each sub-slot, and the quantity of symbols contained in each sub-slot are pre-defined or configured.

The quantities of symbols contained in different sub-slots within the slot are equal, or unequal.

Correspondingly, the PUCCH resource being in the sub-slot includes: the PUCCH resource does not cross a boundary of the sub-slot; or a start symbol and an end symbol of the PUCCH resource are in the same sub-slot; or the quantity of symbols of the PUCCH resource does not exceed the quantity of symbols contained in the sub-slot.

In the condition that different sub-slots contain different quantities of symbols, the quantity of the symbols of the PUCCH resource does not exceed the quantity of symbols contained in one sub-slot with the largest quantity of symbols.

Preferably, the receiving the UCI according to the PUCCH resource corresponding to the UCI includes the following.

In the condition that the PUCCH resource corresponding to the UCI does not overlap with other uplink channels in time domain, the UCI is received on the PUCCH resource corresponding to the UCI.

The receiving the UCI according to the PUCCH resource corresponding to the UCI includes the following.

For any one sub-slot, in the condition that a PUCCH resource corresponding to first UCI in the any one sub-slot overlaps in at least one symbol with a PUCCH resource corresponding to second UCI, a PUCCH resource for receiving the first UCI and the second UCI is determined, and the PUCCH resource for receiving the first UCI and the second UCI is in one sub-slot; and the first UCI and the second UCI are received on the determined PUCCH resource.

### Embodiment 9

FIG. 14 is a UCI transmission system provided by an embodiment of the present disclosure. The system includes a terminal 1401 and a base station 1402.

The terminal 1401 is configured to receive configuration information; determine a PUCCH resource corresponding to UCI according to the configuration information, wherein the PUCCH resource is in one sub-slot; and send the UCI according to the PUCCH resource corresponding to the UCI.

The base station 1402 is configured to send the configuration information, wherein the configuration information is configured to indicate the PUCCH resource corresponding to the UCI and the PUCCH resource is in one sub-slot; and receive the UCI according to the PUCCH resource corresponding to the UCI.

Further, the configuration information is a high-level signaling, DCI, or MAC CE, and the UCI includes: at least one of HARQ-ACK, CSI or SR.

The sub-slot is a pre-defined or configured time unit with a fixed quantity of symbols in a slot, and an order of sub-slots within the slot, a position of each sub-slot, and the quantity of symbols contained in each sub-slot are pre-defined or configured.

The quantities of symbols contained in different sub-slots within the slot are equal, or unequal.

Correspondingly, the PUCCH resource being in the sub-slot includes: the PUCCH resource does not cross a boundary of the sub-slot; or a start symbol and an end symbol of the PUCCH resource are in the same sub-slot; or the quantity of symbols of the PUCCH resource does not exceed the quantity of symbols contained in the sub-slot.

In the condition that different sub-slots contain different quantities of symbols, the quantity of the symbols of the PUCCH resource does not exceed the quantity of symbols contained in one sub-slot with the largest quantity of symbols.

Preferably, the sending the UCI according to the PUCCH resource corresponding to the UCI includes the following.

In the condition that the PUCCH resource corresponding to the UCI does not overlap with other uplink channels in time domain, the UCI is sent on the PUCCH resource corresponding to the UCI.

The sending the UCI according to the PUCCH resource corresponding to the UCI includes the following.

For any one sub-slot, in the condition that a PUCCH resource corresponding to first UCI in the any one sub-slot overlaps in at least one symbol with a PUCCH resource corresponding to second UCI, a PUCCH resource for sending the first UCI and the second UCI is determined, and the PUCCH resource for sending the first UCI and the second UCI is in one sub-slot; and the first UCI and the second UCI are sent on the determined PUCCH resource.

Preferably, the receiving the UCI according to the PUCCH resource corresponding to the UCI includes the following.

In the condition that the PUCCH resource corresponding to the UCI does not overlap with other uplink channels in time domain, the UCI is received on the PUCCH resource corresponding to the UCI.

The receiving the UCI according to the PUCCH resource corresponding to the UCI includes the following.

For any one sub-slot, in the condition that a PUCCH resource corresponding to first UCI in the any one sub-slot overlaps in at least one symbol with a PUCCH resource corresponding to second UCI, a PUCCH resource for receiving the first UCI and the second UCI is determined, and the PUCCH resource for receiving the first UCI and the second UCI is in one sub-slot; and the first UCI and the second UCI are received on the determined PUCCH resource.

### Embodiment 10

According to the above embodiments, an embodiment of the present disclosure further provides a computer readable storage medium. The computer readable storage medium stores a computer program executable by a terminal, and when the program is run on the terminal, the terminal executes the following steps.

A memory stores the computer program, and when the program is executed by a processor, the processor executes the following steps.

Configuration information is received.

A PUCCH resource corresponding to UCI is determined according to the configuration information, wherein the PUCCH resource is in one sub-slot.

The UCI is sent according to the PUCCH resource corresponding to the UCI.

Further, the configuration information is a high-level signaling, DCI, or MAC CE, and the UCI includes: at least one of HARQ-ACK, CSI or SR.

The sub-slot is a pre-defined or configured time unit with a fixed quantity of symbols in a slot, and an order of sub-slots within the slot, a position of each sub-slot, and the quantity of symbols contained in each sub-slot are pre-defined or configured.

The quantities of symbols contained in different sub-slots within the slot are equal, or unequal.

Correspondingly, the PUCCH resource being in the sub-slot includes: the PUCCH resource does not cross a boundary of the sub-slot; or a start symbol and an end symbol of the PUCCH resource are in the same sub-slot; or the quantity of symbols of the PUCCH resource does not exceed the quantity of symbols contained in the sub-slot.

In the condition that different sub-slots contain different quantities of symbols, the quantity of the symbols of the PUCCH resource does not exceed the quantity of symbols contained in one sub-slot with the largest quantity of symbols.

Preferably, the sending the UCI according to the PUCCH resource corresponding to the UCI includes the following.

In the condition that the PUCCH resource corresponding to the UCI does not overlap with other uplink channels in time domain, the UCI is sent on the PUCCH resource corresponding to the UCI.

The sending the UCI according to the PUCCH resource corresponding to the UCI includes the following.

For any one sub-slot, in the condition that a PUCCH resource corresponding to first UCI in the any one sub-slot overlaps in at least one symbol with a PUCCH resource corresponding to second UCI, a PUCCH resource for sending the first UCI and the second UCI is determined, and the PUCCH resource for sending the first UCI and the second UCI is in one sub-slot; and the first UCI and the second UCI are sent on the determined PUCCH resource.

### Embodiment 11

According to the above embodiments, an embodiment of the present disclosure further provides a computer readable storage medium. The computer readable storage medium stores a computer program executable by a base station, and when the program is run on the base station, the base station executes the following steps.

A memory stores the computer program, and when the program is executed by a processor, the processor executes the following steps.

Configuration information is sent, wherein the configuration information is configured to indicate a PUCCH resource corresponding to UCI, and the PUCCH resource is in one sub-slot.

The UCI is received according to the PUCCH resource corresponding to the UCI.

Further, the configuration information is a high-level signaling, DCI, or MAC CE, and the UCI includes: at least one of HARQ-ACK, CSI or SR.

The sub-slot is a pre-defined or configured time unit with a fixed quantity of symbols in a slot, and an order of sub-slots within the slot, a position of each sub-slot, and the quantity of symbols contained in each sub-slot are pre-defined or configured.

The quantities of symbols contained in different sub-slots within the slot are equal, or unequal.

Correspondingly, the PUCCH resource being in the sub-slot includes: the PUCCH resource does not cross a boundary of the sub-slot; or a start symbol and an end symbol of the PUCCH resource are in the same sub-slot; or the quantity of symbols of the PUCCH resource does not exceed the quantity of symbols contained in the sub-slot.

In the condition that different sub-slots contain different quantities of symbols, the quantity of the symbols of the PUCCH resource does not exceed the quantity of symbols contained in one sub-slot with the largest quantity of symbols.

Preferably, the receiving the UCI according to the PUCCH resource corresponding to the UCI includes the following.

In the condition that the PUCCH resource corresponding to the UCI does not overlap with other uplink channels in time domain, the UCI is received on the PUCCH resource corresponding to the UCI.

The receiving the UCI according to the PUCCH resource corresponding to the UCI includes the following.

For any one sub-slot, in the condition that a PUCCH resource corresponding to first UCI in the any one sub-slot overlaps in at least one symbol with a PUCCH resource corresponding to second UCI, a PUCCH resource for receiving the first UCI and the second UCI is determined, and the PUCCH resource for receiving the first UCI and the second UCI is in one sub-slot; and the first UCI and the second UCI are received on the determined PUCCH resource.

The above-mentioned computer readable storage medium may be any available medium or data storage device that may be accessed by a processor in an electronic device, including but not limited to magnetic memories such as a floppy disk, a hard disk, a magnetic tape, a magnetooptical disk (MO), etc., optical memories such as a CD, a DVD, a BD, a HVD, etc., and semiconductor memories such as a ROM, an EPROM, an EEPROM, a non-volatile memory (NAND FLASH), a solid state drive (SSD), etc.

As for the system/device embodiments, since it is basically similar to the method embodiments, the description is relatively simple, and for related parts, please refer to the part of the description of the method embodiments.

It should be noted that relational terms such as first and second here are only used to distinguish one entity or operation from another entity or operation, and do not necessarily require or imply that any actual relationship or order exits between these entities or operations.

Those of skill in the art should understand that the embodiments of the present application can be provided as a method, a system, or a computer program product. Therefore, the present application may adopt the form of a complete hardware embodiment, a complete application embodiment, or an embodiment combining applications and hardware. Moreover, the present application may adopt the form of a computer program product implemented on one or more computer-usable storage media (including but not limited to a disk memory, a CD-ROM, an optical storage, etc.) containing computer-usable program codes.

The present disclosure is described with reference to flowcharts and/or block diagrams of methods, devices (systems), and computer program products according to embodiments of the present disclosure. It should be understood that each process and/or block in the flowcharts and/or block diagrams, and a combination of processes and/or blocks in the flowcharts and/or block diagrams may be realized by computer program instructions. These computer program instructions may be provided to a processor of a general-purpose computer, a special-purpose computer, an embedded processor, or other programmable data processing devices to generate a machine, so that a device that realizes functions specified in one process or multiple processes in the flowcharts and/or one block or multiple blocks in the block diagrams is generated through the instructions executed by the processor of the computer or other programmable data processing devices.

These computer program instructions may also be stored in a computer readable memory that can guide the computer or other programmable data processing devices to work in a specific manner, so that the instructions stored in the computer readable memory generate an article of manufacture including an instruction apparatus. The instruction apparatus realizes the functions specified in one process or multiple processes in the flowcharts and/or one block or multiple blocks in the block diagrams.

These computer program instructions may also be loaded on the computer or other programmable data processing devices, so that a series of operation steps are executed on the computer or other programmable devices to produce computer-implemented processing, so that the instructions executed on the computer or other programmable data processing devices provide steps for realizing the functions specified in one process or multiple processes in the flowcharts and/or one block or multiple blocks in the block diagrams.

## Claims

1. A method for sending uplink control information, UCI, comprising:
receiving (S301), by a terminal, configuration information;
determining (S302), by the terminal, according to the configuration information, a first physical uplink control channel, PUCCH, resource corresponding to first UCI and a second PUCCH resource corresponding to second UCI, wherein the first and second PUCCH resources are in one sub-slot, and the first UCI is hybrid automatic repeat request-acknowledgement, HARQ-ACK, and the second UCI is channel state information, CSI, or a scheduling request, SR; and
sending (S303), by the terminal, the first and second UCI according to the first and second PUCCH resources;
wherein the sending (S303) the first and second UCI according to the first and second PUCCH resources comprises:
determining, for any one sub-slot, in a condition that at least one symbol of the first PUCCH resource corresponding to the first UCI in the any one sub-slot overlaps with at least one symbol of the second PUCCH resource corresponding to the second UCI, a third PUCCH resource for sending the first UCI and the second UCI, wherein the third PUCCH resource for sending the first UCI and the second UCI is in the any one sub-slot; and sending the first UCI and the second UCI on the determined third PUCCH resource.

2. The method according to claim 1, wherein the configuration information is a high-layer signaling, downlink control information, DCI, or a media access control, MAC, control element, CE; and/or;
the one sub-slot is a pre-defined or configured time unit with a fixed quantity of symbols in one slot, and an order of sub-slots within the one slot, a position of each sub-slot, and a quantity of symbols contained in each sub-slot are pre-defined or configured; and/or
the first and second PUCCH resources being in one sub-slot comprises:
the first and second PUCCH resources do not cross a boundary of one sub-slot; or
start symbols and end symbols of the first and second PUCCH resources are in one same sub-slot; or
a quantity of symbols of the first PUCCH resource does not exceed a quantity of symbols contained in one sub-slot, and a quantity of symbols of the second PUCCH resource does not exceed a quantity of symbols contained in one sub-slot.

3. The method according to claim 2, wherein in a condition that different sub-slots contain different quantities of symbols, the quantity of the symbols of the first PUCCH resource does not exceed a quantity of symbols contained in a sub-slot with a largest quantity of symbols, and the quantity of the symbols of the second PUCCH resource does not exceed a quantity of symbols contained in a sub-slot with a largest quantity of symbols.

4. The method according to claim 1, wherein the sending (S303) the first and second UCI according to the first and second PUCCH resources comprises:
sending, in a condition that the first PUCCH resource corresponding to the first UCI does not overlap with other uplink channels in time domain, the first UCI on the first PUCCH resource corresponding to the first UCI.

5. A method for receiving uplink control information, UCI, comprising:
sending (S401), by a base station, configuration information, wherein the configuration information is configured to indicate a first physical uplink control channel, PUCCH, resource corresponding to first UCI and a second PUCCH resource corresponding to second UCI, the first and second PUCCH resources are in one sub-slot, and the first UCI is hybrid automatic repeat request-acknowledgement, HARQ-ACK, and the second UCI is channel state information, CSI, or a scheduling request, SR; and
receiving (S402), by the base station, the first UCI and the second UCI according to the first and second PUCCH resources;
wherein the receiving (S402) the first and second UCI according to the first and second PUCCH resources comprises:
determining, for any one sub-slot, in a condition that at least one symbol of the first PUCCH resource corresponding to the first UCI in the any one sub-slot overlaps with at least one symbol of the second PUCCH resource corresponding to the second UCI, a third PUCCH resource for receiving the first UCI and the second UCI, wherein the third PUCCH resource for receiving the first UCI and the second UCI is in the any one sub-slot; and receiving the first UCI and the second UCI on the determined third PUCCH resource.

6. The method according to claim 5, wherein the configuration information is a high-layer signaling, downlink control information, DCI, or a media access control, MAC, control element, CE; and/or
the one sub-slot is a pre-defined or configured time unit with a fixed quantity of symbols in one slot, and an order of sub-slots within the one slot, a position of each sub-slot, and a quantity of symbols contained in each sub-slot are pre-defined or configured; and/or
the first and second PUCCH resources being in one sub-slot comprises:
the first and second PUCCH resources do not cross a boundary of one sub-slot; or
start symbols and end symbols of the first and second PUCCH resources are in one same sub-slot; or
a quantity of symbols of the first PUCCH resource does not exceed a quantity of symbols contained in one sub-slot, and a quantity of symbols of the second PUCCH resource does not exceed a quantity of symbols contained in one sub-slot.

7. The method according to claim 6, wherein in a condition that different sub-slots contain different quantities of symbols, the quantity of the symbols of the first PUCCH resource does not exceed a quantity of symbols contained in a sub-slot with a largest quantity of symbols, and the quantity of the symbols of the second PUCCH resource does not exceed a quantity of symbols contained in a sub-slot with a largest quantity of symbols.

8. The method according to claim 5, wherein the receiving (S402) the first and second UCI according to the first and second PUCCH resource comprises:
receiving, in a condition that the first PUCCH resource corresponding to the first UCI does not overlap with other uplink channels in time domain, the first UCI on the first PUCCH resource corresponding to the first UCI.

9. An apparatus for sending uplink control information, UCI, comprising:
a receiving module (1001), configured to receive configuration information;
a determining module (1002), configured to determine a first physical uplink control channel, PUCCH, resource corresponding to first UCI and a second PUCCH resource corresponding to second UCI according to the configuration information, wherein the first and second PUCCH resources are in one sub-slot, and the first UCI is hybrid automatic repeat request-acknowledgement, HARQ-ACK, and the second UCI is channel state information, CSI, or a scheduling request, SR; and
a sending module (1003), configured to send the first and second UCI according to the first and second PUCCH resources;
wherein the sending module (1003) is further configured to:
determine, for any one sub-slot, in a condition that at least one symbol of the first PUCCH resource corresponding to the first UCI in the any one sub-slot overlaps with at least one symbol of the second PUCCH resource corresponding to the second UCI, a third PUCCH resource for sending the first UCI and the second UCI, wherein the third PUCCH resource for sending the first UCI and the second UCI is in the any one sub-slot; and send the first UCI and the second UCI on the determined third PUCCH resource.

10. The apparatus according to claim 9, wherein:
the configuration information is a high-layer signaling, downlink control information, DCI, or a media access control, MAC, control element, CE; and/or;
the one sub-slot is a pre-defined or configured time unit with a fixed quantity of symbols in one slot, and an order of sub-slots within the one slot, a position of each sub-slot, and a quantity of symbols contained in each sub-slot are pre-defined or configured; and/or
the first and second PUCCH resources being in one sub-slot comprises:
the first and second PUCCH resources do not cross a boundary of one sub-slot; or
start symbols and end symbols of the first and second PUCCH resources are in one same sub-slot; or
a quantity of symbols of the first PUCCH resource does not exceed a quantity of symbols contained in one sub-slot, and a quantity of symbols of the second PUCCH resource does not exceed a quantity of symbols contained in one sub-slot.

11. The apparatus according to claim 10, wherein in a condition that different sub-slots contain different quantities of symbols, the quantity of the symbols of the first PUCCH resource does not exceed a quantity of symbols contained in a sub-slot with a largest quantity of symbols, and the quantity of the symbols of the second PUCCH resource does not exceed a quantity of symbols contained in a sub-slot with a largest quantity of symbols.

12. The apparatus according to claim 9, wherein the sending module (1003) is further configured to:
send, in a condition that the first PUCCH resource corresponding to the first UCI does not overlap with other uplink channels in time domain, the first UCI on the first PUCCH resource corresponding to the first UCI.

13. An apparatus for receiving uplink control information, UCI, comprising:
a sending module (1101), configured to send configuration information, wherein the configuration information is configured to indicate a first physical uplink control channel, PUCCH, resource corresponding to first UCI and a second PUCCH resource corresponding to second UCI, the first and second PUCCH resources are in one sub-slot, and the first UCI is hybrid automatic repeat request-acknowledgement, HARQ-ACK, and the second UCI is channel state information, CSI, or a scheduling request, SR; and
a receiving module (1102), configured to receive the first UCI and the second UCI according to the first and second PUCCH resources;
wherein the receiving module (1102) is further configured to:
determine, for any one sub-slot, in a condition that at least one symbol of the first PUCCH resource corresponding to the first UCI in the any one sub-slot overlaps with at least one symbol of the second PUCCH resource corresponding to the second UCI, a third PUCCH resource for receiving the first UCI and the second UCI, wherein the third PUCCH resource for receiving the first UCI and the second UCI is in the any one sub-slot; and receive the first UCI and the second UCI on the determined third PUCCH resource.

14. The apparatus according to claim 13, wherein the configuration information is a high-layer signaling, downlink control information, DCI, or a media access control, MAC, control element, CE; and/or
the one sub-slot is a pre-defined or configured time unit with a fixed quantity of symbols in one slot, and an order of sub-slots within the one slot, a position of each sub-slot, and a quantity of symbols contained in each sub-slot are pre-defined or configured; and/or
the first and second PUCCH resources being in one sub-slot comprises:
the first and second PUCCH resources do not cross a boundary of one sub-slot; or
start symbols and end symbols of the first and second PUCCH resources are in one same sub-slot; or
a quantity of symbols of the first PUCCH resource does not exceed a quantity of symbols contained in one sub-slot, and a quantity of symbols of the second PUCCH resource does not exceed a quantity of symbols contained in one sub-slot.

15. The apparatus according to claim 14, wherein in a condition that different sub-slots contain different quantities of symbols, the quantity of the symbols of the first PUCCH resource does not exceed a quantity of symbols contained in a sub-slot with a largest quantity of symbols, and the quantity of the symbols of the second PUCCH resource does not exceed a quantity of symbols contained in a sub-slot with a largest quantity of symbols.

16. The method according to claim 13, wherein the receiving module (1102) is further configured to:
receive, in a condition that the first PUCCH resource corresponding to the first UCI does not overlap with other uplink channels in time domain, the first UCI on the first PUCCH resource corresponding to the first UCI.

## Patentansprüche

1. Verfahren zum Senden von Uplink-Steuerinformationen, UCI (Uplink Control Information), das Folgendes umfasst:
Empfangen (S301), durch ein Endgerät, von Konfigurationsinformationen;
Bestimmen (S302), durch das Endgerät, gemäß den Konfigurationsinformationen, einer ersten physikalischen Aufwärtsstrecken-Steuerkanal, PUCCH (Physical Uplink Control Channel), -Ressource, die einer ersten UCI entspricht, und einer zweiten PUCCH-Ressource, die einer zweiten UCI entspricht, wobei sich die erste und die zweite PUCCH-Ressource in einem Unterschlitz befinden und die erste UCI eine hybride automatische Wiederholungsanforderungsbestätigung (HARQ-ACK, Hybrid Automatic Repeat Request-Acknowledgement) und die zweite UCI eine Kanalzustandsinformation (CSI, Channel State Information) oder eine Planungsanforderung (SR, Scheduling Request) ist; und
Senden (S303), durch das Endgerät, der ersten und der zweiten UCI gemäß der ersten und der zweiten PUCCH-Ressource;
wobei das Senden (S303) der ersten und der zweiten UCI gemäß der ersten und der zweiten PUCCH-Ressource umfasst: Bestimmen, für einen beliebigen Unterschlitz, unter der Bedingung, dass mindestens ein Symbol der ersten PUCCH-Ressource, die der ersten UCI entspricht, in dem beliebigen Unterschlitz mit mindestens einem Symbol der zweiten PUCCH-Ressource, die der zweiten UCI entspricht, überlappt, einer dritten PUCCH-Ressource zum Senden der ersten UCI und der zweiten UCI, wobei die dritte PUCCH-Ressource zum Senden der ersten UCI und der zweiten UCI in dem beliebigen Unterschlitz liegt; und Senden der ersten UCI und der zweiten UCI auf der bestimmten dritten PUCCH-Ressource.

2. Verfahren nach Anspruch 1, wobei die Konfigurationsinformationen Signalisierung einer hohen Schicht, Downlink-Steuerinformationen (DCI, Downlink Control Information) oder ein Medienzugriffssteuerung (MAC, Media Access Control) -Steuerelement (CE, Control Element) sind; und/oder
der eine Unterschlitz eine vordefinierte oder konfigurierte Zeiteinheit mit einer festen Menge von Symbolen in einem Schlitz ist und eine Reihenfolge der Unterschlitze innerhalb des einen Schlitzes, eine Position jedes Unterschlitzes und eine Menge von Symbolen, die in jedem Unterschlitz enthalten sind, vordefiniert oder konfiguriert sind; und/oder
das Enthaltensein der ersten und der zweiten PUCCH-Ressource in einem Unterschlitz umfasst:
die erste und die zweite PUCCH-Ressource überschreiten nicht eine Grenze von einem Unterschlitz; oder
Startsymbole und Endsymbole der ersten und der zweiten PUCCH-Ressource befinden sich in ein und demselben Unterschlitz; oder
eine Menge von Symbolen der ersten PUCCH-Ressource überschreitet nicht eine Menge von Symbolen, die in einem Unterschlitz enthalten sind, und eine Menge von Symbolen der zweiten PUCCH-Ressource überschreitet nicht eine Menge von Symbolen, die in einem Unterschlitz enthalten sind.

3. Verfahren nach Anspruch 2, wobei unter der Bedingung, dass verschiedene Unterschlitze verschiedene Mengen von Symbolen enthalten, die Menge der Symbole der ersten PUCCH-Ressource eine Menge von Symbolen nicht überschreitet, die in einem Unterschlitz mit einer größten Menge von Symbolen enthalten ist, und die Menge der Symbole der zweiten PUCCH-Ressource eine Menge von Symbolen nicht überschreitet, die in einem Unterschlitz mit einer größten Menge von Symbolen enthalten ist.

4. Verfahren nach Anspruch 1, wobei das Senden (S303) der ersten und der zweiten UCI gemäß der ersten und der zweiten PUCCH-Ressource umfasst:
Senden, unter der Bedingung, dass sich die erste PUCCH-Ressource, die der ersten UCI entspricht, nicht mit anderen Uplink-Kanälen im Zeitbereich überlappt, der ersten UCI auf der ersten PUCCH-Ressource, die der ersten UCI entspricht.

5. Verfahren zum Empfangen von Uplink-Steuerinformationen, UCI (Uplink Control Information), das Folgendes umfasst:
Senden (S401), durch eine Basisstation, von Konfigurationsinformationen, wobei die Konfigurationsinformationen konfiguriert sind zum Anzeigen einer ersten physikalischen Aufwärtsstrecken-Steuerkanal, PUCCH (Physical Uplink Control Channel), - Ressource, die einer ersten UCI entspricht, und einer zweiten PUCCH-Ressource, die einer zweiten UCI entspricht, wobei sich die erste und die zweite PUCCH-Ressource in einem Unterschlitz befinden und die erste UCI eine hybride automatische Wiederholungsanforderungsbestätigung (HARQ-ACK, Hybrid Automatic Repeat Request-Acknowledgement) und die zweite UCI eine Kanalzustandsinformation (CSI, Channel State Information) oder eine Planungsanforderung (SR, Scheduling Request) ist; und
Empfangen (S402), durch die Basisstation, der ersten und der zweiten UCI gemäß der ersten und der zweiten PUCCH-Ressource;
wobei das Empfangen (S402) der ersten und der zweiten UCI gemäß der ersten und der zweiten PUCCH-Ressource umfasst: Bestimmen, für einen beliebigen Unterschlitz, unter der Bedingung, dass mindestens ein Symbol der ersten PUCCH-Ressource, die der ersten UCI entspricht, in dem beliebigen Unterschlitz mit mindestens einem Symbol der zweiten PUCCH-Ressource, die der zweiten UCI entspricht, überlappt, einer dritten PUCCH-Ressource zum Empfangen der ersten UCI und der zweiten UCI, wobei die dritte PUCCH-Ressource zum Empfangen der ersten UCI und der zweiten UCI in dem beliebigen Unterschlitz liegt; und Empfangen der ersten UCI und der zweiten UCI auf der bestimmten dritten PUCCH-Ressource.

6. Verfahren nach Anspruch 5, wobei die Konfigurationsinformationen Signalisierung einer hohen Schicht, Downlink-Steuerinformationen (DCI, Downlink Control Information) oder ein Medienzugriffssteuerung (MAC, Media Access Control) -Steuerelement (CE, Control Element) sind; und/oder
der eine Unterschlitz eine vordefinierte oder konfigurierte Zeiteinheit mit einer festen Menge von Symbolen in einem Schlitz ist und eine Reihenfolge der Unterschlitze innerhalb des einen Schlitzes, eine Position jedes Unterschlitzes und eine Menge von Symbolen, die in jedem Unterschlitz enthalten sind, vordefiniert oder konfiguriert sind; und/oder
das Enthaltensein der ersten und der zweiten PUCCH-Ressource in einem Unterschlitz umfasst:
die erste und die zweite PUCCH-Ressource überschreiten nicht eine Grenze von einem Unterschlitz; oder
Startsymbole und Endsymbole der ersten und der zweiten PUCCH-Ressource befinden sich in ein und demselben Unterschlitz; oder
eine Menge von Symbolen der ersten PUCCH-Ressource überschreitet nicht eine Menge von Symbolen, die in einem Unterschlitz enthalten sind, und eine Menge von Symbolen der zweiten PUCCH-Ressource überschreitet nicht eine Menge von Symbolen, die in einem Unterschlitz enthalten sind.

7. Verfahren nach Anspruch 6, wobei unter der Bedingung, dass verschiedene Unterschlitze verschiedene Mengen von Symbolen enthalten, die Menge der Symbole der ersten PUCCH-Ressource eine Menge von Symbolen nicht überschreitet, die in einem Unterschlitz mit einer größten Menge von Symbolen enthalten ist, und die Menge der Symbole der zweiten PUCCH-Ressource eine Menge von Symbolen nicht überschreitet, die in einem Unterschlitz mit einer größten Menge von Symbolen enthalten ist.

8. Verfahren nach Anspruch 5, wobei das Empfangen (S402) der ersten und der zweiten UCI gemäß der ersten und der zweiten PUCCH-Ressource umfasst:
Empfangen, unter der Bedingung, dass sich die erste PUCCH-Ressource, die der ersten UCI entspricht, nicht mit anderen Uplink-Kanälen im Zeitbereich überlappt, der ersten UCI auf der ersten PUCCH-Ressource, die der ersten UCI entspricht.

9. Einrichtung zum Senden von Uplink-Steuerinformationen, UCI (Uplink Control Information), das Folgendes umfasst:
ein Empfangsmodul (1001), das zum Empfangen von Konfigurationsinformationen konfiguriert ist;
ein Bestimmungsmodul (1002), das konfiguriert ist zum Bestimmen einer ersten physikalischen Aufwärtsstrecken-Steuerkanal, PUCCH (Physical Uplink Control Channel), - Ressource, die einer ersten UCI entspricht, und einer zweiten PUCCH-Ressource, die einer zweiten UCI entspricht, gemäß den Konfigurationsinformationen, wobei sich die erste und die zweite PUCCH-Ressource in einem Unterschlitz befinden und die erste UCI eine hybride automatische Wiederholungsanforderungsbestätigung (HARQ-ACK, Hybrid Automatic Repeat Request-Acknowledgement) und die zweite UCI eine Kanalzustandsinformation (CSI, Channel State Information) oder eine Planungsanforderung (SR, Scheduling Request) ist; und
ein Sendemodul (1003), das konfiguriert ist zum Senden der ersten und der zweiten UCI gemäß der ersten und der zweiten PUCCH-Ressource;
wobei das Sendemodul (1003) ferner konfiguriert ist zum: Bestimmen, für einen beliebigen Unterschlitz, unter der Bedingung, dass mindestens ein Symbol der ersten PUCCH-Ressource, die der ersten UCI entspricht, in dem beliebigen Unterschlitz mit mindestens einem Symbol der zweiten PUCCH-Ressource, die der zweiten UCI entspricht, überlappt, einer dritten PUCCH-Ressource zum Senden der ersten UCI und der zweiten UCI, wobei die dritte PUCCH-Ressource zum Senden der ersten UCI und der zweiten UCI in dem beliebigen Unterschlitz liegt; und Senden der ersten UCI und der zweiten UCI auf der bestimmten dritten PUCCH-Ressource.

10. Einrichtung nach Anspruch 9, wobei:
die Konfigurationsinformationen Signalisierung einer hohen Schicht, Downlink-Steuerinformationen (DCI, Downlink Control Information) oder ein Medienzugriffssteuerung (MAC, Media Access Control)-Steuerelement (CE, Control Element) sind; und/oder
der eine Unterschlitz eine vordefinierte oder konfigurierte Zeiteinheit mit einer festen Menge von Symbolen in einem Schlitz ist und eine Reihenfolge der Unterschlitze innerhalb des einen Schlitzes, eine Position jedes Unterschlitzes und eine Menge von Symbolen, die in jedem Unterschlitz enthalten sind, vordefiniert oder konfiguriert sind; und/oder
das Enthaltensein der ersten und der zweiten PUCCH-Ressource in einem Unterschlitz umfasst:
die erste und die zweite PUCCH-Ressource überschreiten nicht eine Grenze von einem Unterschlitz; oder
Startsymbole und Endsymbole der ersten und der zweiten PUCCH-Ressource befinden sich in ein und demselben Unterschlitz; oder
eine Menge von Symbolen der ersten PUCCH-Ressource überschreitet nicht eine Menge von Symbolen, die in einem Unterschlitz enthalten sind, und eine Menge von Symbolen der zweiten PUCCH-Ressource überschreitet nicht eine Menge von Symbolen, die in einem Unterschlitz enthalten sind.

11. Einrichtung nach Anspruch 10, wobei unter der Bedingung, dass verschiedene Unterschlitze verschiedene Mengen von Symbolen enthalten, die Menge der Symbole der ersten PUCCH-Ressource eine Menge von Symbolen nicht überschreitet, die in einem Unterschlitz mit einer größten Menge von Symbolen enthalten ist, und die Menge der Symbole der zweiten PUCCH-Ressource eine Menge von Symbolen nicht überschreitet, die in einem Unterschlitz mit einer größten Menge von Symbolen enthalten ist.

12. Einrichtung nach Anspruch 9, wobei das Sendemodul (1003) ferner konfiguriert ist zum:
Senden, unter der Bedingung, dass sich die erste PUCCH-Ressource, die der ersten UCI entspricht, nicht mit anderen Uplink-Kanälen im Zeitbereich überlappt, der ersten UCI auf der ersten PUCCH-Ressource, die der ersten UCI entspricht.

13. Einrichtung zum Empfangen von Uplink-Steuerinformationen, UCI (Uplink Control Information), das Folgendes umfasst:
ein Sendemodul (1101), das konfiguriert ist zum Senden von Konfigurationsinformationen, wobei die Konfigurationsinformationen konfiguriert sind zum Anzeigen einer ersten physikalischen Aufwärtsstrecken-Steuerkanal, PUCCH (Physical Uplink Control Channel), - Ressource, die einer ersten UCI entspricht, und einer zweiten PUCCH-Ressource, die einer zweiten UCI entspricht, wobei sich die erste und die zweite PUCCH-Ressource in einem Unterschlitz befinden und die erste UCI eine hybride automatische Wiederholungsanforderungsbestätigung (HARQ-ACK, Hybrid Automatic Repeat Request-Acknowledgement) und die zweite UCI eine Kanalzustandsinformation (CSI, Channel State Information) oder eine Planungsanforderung (SR, Scheduling Request) ist; und
ein Empfangsmodul (1102), das konfiguriert ist zum Empfangen der ersten UCI und der zweiten UCI gemäß der ersten und der zweiten PUCCH-Ressource;
wobei das Empfangsmodul (1102) ferner konfiguriert ist zum:
Bestimmen, für einen beliebigen Unterschlitz, unter der Bedingung, dass mindestens ein Symbol der ersten PUCCH-Ressource, die der ersten UCI entspricht, in dem beliebigen Unterschlitz mit mindestens einem Symbol der zweiten PUCCH-Ressource, die der zweiten UCI entspricht, überlappt, einer dritten PUCCH-Ressource zum Empfangen der ersten UCI und der zweiten UCI, wobei die dritte PUCCH-Ressource zum Empfangen der ersten UCI und der zweiten UCI in dem beliebigen Unterschlitz liegt; und Empfangen der ersten UCI und der zweiten UCI auf der bestimmten dritten PUCCH-Ressource.

14. Einrichtung nach Anspruch 13, wobei die Konfigurationsinformationen Signalisierung einer hohen Schicht, Downlink-Steuerinformationen (DCI, Downlink Control Information) oder ein Medienzugriffssteuerung (MAC, Media Access Control) -Steuerelement (CE, Control Element) sind; und/oder
der eine Unterschlitz eine vordefinierte oder konfigurierte Zeiteinheit mit einer festen Menge von Symbolen in einem Schlitz ist und eine Reihenfolge der Unterschlitze innerhalb des einen Schlitzes, eine Position jedes Unterschlitzes und eine Menge von Symbolen, die in jedem Unterschlitz enthalten sind, vordefiniert oder konfiguriert sind; und/oder
das Enthaltensein der ersten und der zweiten PUCCH-Ressource in einem Unterschlitz umfasst:
die erste und die zweite PUCCH-Ressource überschreiten nicht eine Grenze von einem Unterschlitz; oder
Startsymbole und Endsymbole der ersten und der zweiten PUCCH-Ressource befinden sich in ein und demselben Unterschlitz; oder
eine Menge von Symbolen der ersten PUCCH-Ressource überschreitet nicht eine Menge von Symbolen, die in einem Unterschlitz enthalten sind, und eine Menge von Symbolen der zweiten PUCCH-Ressource überschreitet nicht eine Menge von Symbolen, die in einem Unterschlitz enthalten sind.

15. Einrichtung nach Anspruch 14, wobei unter der Bedingung, dass verschiedene Unterschlitze verschiedene Mengen von Symbolen enthalten, die Menge der Symbole der ersten PUCCH-Ressource eine Menge von Symbolen nicht überschreitet, die in einem Unterschlitz mit einer größten Menge von Symbolen enthalten ist, und die Menge der Symbole der zweiten PUCCH-Ressource eine Menge von Symbolen nicht überschreitet, die in einem Unterschlitz mit einer größten Menge von Symbolen enthalten ist.

16. Verfahren nach Anspruch 13, wobei das Empfangsmodul (1102) ferner konfiguriert ist zum:
Empfangen, unter der Bedingung, dass sich die erste PUCCH-Ressource, die der ersten UCI entspricht, nicht mit anderen Uplink-Kanälen im Zeitbereich überlappt, der ersten UCI auf der ersten PUCCH-Ressource, die der ersten UCI entspricht.

## Revendications

1. Procédé d'envoi d'informations de contrôle en liaison montante, notées UCI, comprenant :
la réception (S301), par un terminal, d'informations de configuration ;
la détermination (S302), par le terminal, selon les informations de configuration, d'une première ressource de canal physique de contrôle en liaison montante, noté PUCCH, correspondant à des premières UCI et d'une deuxième ressource PUCCH correspondant à des deuxièmes UCI, les première et deuxième ressources PUCCH occupant un sous-slot, et les premières UCI consistant en un acquittement de demande de répétition automatique hybride, noté HARQ-ACK, et les deuxièmes UCI consistant en des informations d'état de canal, notées CSI, ou en une demande d'ordonnancement, notée SR ; et
l'envoi (S303), par le terminal, des premières et deuxièmes UCI selon les première et deuxième ressources PUCCH ;
l'envoi (S303) des premières et deuxièmes UCI selon les première et deuxième ressources PUCCH comprenant :
la détermination, pour un sous-slot quelconque, à condition qu'au moins un symbole de la première ressource PUCCH correspondant aux premières UCI dans le sous-slot quelconque chevauche au moins un symbole de la deuxième ressource PUCCH correspondant aux deuxièmes UCI, d'une troisième ressource PUCCH pour l'envoi des premières UCI et des deuxièmes UCI, la troisième ressource PUCCH pour l'envoi des premières UCI et des deuxièmes UCI occupant le sous-slot quelconque ; et l'envoi des premières UCI et des deuxièmes UCI sur la troisième ressource PUCCH déterminée.

2. Procédé selon la revendication 1, les informations de configuration consistant en une signalisation des couches supérieures, en des informations de contrôle en liaison descendante, notées DCI, ou en un élément de contrôle, noté CE, de la couche de contrôle d'accès au support, notée MAC ; et/ou
le sous-slot consistant en une unité de temps prédéfinie ou configurée avec une quantité fixe de symboles dans un slot, et un ordre de sous-slots au sein du slot, une position de chaque sous-slot, et une quantité de symboles contenus dans chaque sous-slot étant prédéfinis ou configurés ; et/ou
le fait que les première et deuxième ressources PUCCH occupent un sous-slot comprenant :
le fait que les première et deuxième ressources PUCCH ne franchissent pas une limite d'un sous-slot ; ou
le fait que les symboles de début et les symboles de fin des première et deuxième ressources PUCCH occupent un même sous-slot ; ou
le fait qu'une quantité de symboles de la première ressource PUCCH ne dépasse pas une quantité de symboles contenus dans un sous-slot, et qu'une quantité de symboles de la deuxième ressource PUCCH ne dépasse pas une quantité de symboles contenus dans un sous-slot.

3. Procédé selon la revendication 2, à condition que des sous-slots différents contiennent des quantités différentes de symboles, la quantité des symboles de la première ressource PUCCH ne dépassant pas une quantité de symboles contenus dans un sous-slot ayant la plus grande quantité de symboles, et la quantité des symboles de la deuxième ressource PUCCH ne dépassant pas une quantité de symboles contenus dans un sous-slot ayant la plus grande quantité de symboles.

4. Procédé selon la revendication 1, l'envoi (S303) des premières et deuxièmes UCI selon les première et deuxième ressources PUCCH comprenant :
l'envoi, à condition que la première ressource PUCCH correspondant aux premières UCI ne chevauche pas d'autres canaux en liaison montante dans le domaine temporel, des premières UCI sur la première ressource PUCCH correspondant aux premières UCI.

5. Procédé de réception d'informations de contrôle en liaison montante, notées UCI, comprenant :
l'envoi (S401), par une station de base, d'informations de configuration, les informations de configuration étant configurées pour indiquer une première ressource de canal physique de contrôle en liaison montante, noté PUCCH, correspondant à des premières UCI et d'une deuxième ressource PUCCH correspondant à des deuxièmes UCI, les première et deuxième ressources PUCCH occupant un sous-slot, et les premières UCI consistant en un acquittement de demande de répétition automatique hybride, noté HARQ-ACK, et les deuxièmes UCI consistant en des informations d'état de canal, notées CSI, ou en une demande d'ordonnancement, notée SR ; et
la réception (S402), par la station de base, des premières UCI et des deuxièmes UCI selon les première et deuxième ressources PUCCH ;
la réception (S402) des premières et deuxièmes UCI selon les première et deuxième ressources PUCCH comprenant :
la détermination, pour un sous-slot quelconque, à condition qu'au moins un symbole de la première ressource PUCCH correspondant aux premières UCI dans le sous-slot quelconque chevauche au moins un symbole de la deuxième ressource PUCCH correspondant aux deuxièmes UCI, d'une troisième ressource PUCCH pour la réception des premières UCI et des deuxièmes UCI, la troisième ressource PUCCH pour la réception des premières UCI et des deuxièmes UCI occupant le sous-slot quelconque ; et la réception des premières UCI et des deuxièmes UCI sur la troisième ressource PUCCH déterminée.

6. Procédé selon la revendication 5, les informations de configuration consistant en une signalisation des couches supérieures, en des informations de contrôle en liaison descendante, notées DCI, ou en un élément de contrôle, noté CE, de la couche de contrôle d'accès au support, notée MAC ; et/ou
le sous-slot consistant en une unité de temps prédéfinie ou configurée avec une quantité fixe de symboles dans un slot, et un ordre de sous-slots au sein du slot, une position de chaque sous-slot, et une quantité de symboles contenus dans chaque sous-slot étant prédéfinis ou configurés ; et/ou
le fait que les première et deuxième ressources PUCCH occupent un sous-slot comprenant :
le fait que les première et deuxième ressources PUCCH ne franchissent pas une limite d'un sous-slot ; ou
le fait que les symboles de début et les symboles de fin des première et deuxième ressources PUCCH occupent un même sous-slot ; ou
le fait qu'une quantité de symboles de la première ressource PUCCH ne dépasse pas une quantité de symboles contenus dans un sous-slot, et qu'une quantité de symboles de la deuxième ressource PUCCH ne dépasse pas une quantité de symboles contenus dans un sous-slot.

7. Procédé selon la revendication 6, à condition que des sous-slots différents contiennent des quantités différentes de symboles, la quantité des symboles de la première ressource PUCCH ne dépassant pas une quantité de symboles contenus dans un sous-slot ayant la plus grande quantité de symboles, et la quantité des symboles de la deuxième ressource PUCCH ne dépassant pas une quantité de symboles contenus dans un sous-slot ayant la plus grande quantité de symboles.

8. Procédé selon la revendication 5, la réception (S402) des premières et deuxièmes UCI selon les première et deuxième ressources PUCCH comprenant :
la réception, à condition que la première ressource PUCCH correspondant aux premières UCI ne chevauche pas d'autres canaux en liaison montante dans le domaine temporel, des premières UCI sur la première ressource PUCCH correspondant aux premières UCI.

9. Appareil d'envoi d'informations de contrôle en liaison montante, notées UCI, comprenant :
un module de réception (1001), configuré pour recevoir des informations de configuration ;
un module de détermination (1002), configuré pour déterminer une première ressource de canal physique de contrôle en liaison montante, noté PUCCH, correspondant à des premières UCI et une deuxième ressource PUCCH correspondant à des deuxièmes UCI selon les informations de configuration, les première et deuxième ressources PUCCH occupant un sous-slot, et les premières UCI consistant en un acquittement de demande de répétition automatique hybride, noté HARQ-ACK, et les deuxièmes UCI consistant en des informations d'état de canal, notées CSI, ou en une demande d'ordonnancement, notée SR ; et
un module d'envoi (1003), configuré pour envoyer les premières et deuxièmes UCI selon les première et deuxième ressources PUCCH ;
le module d'envoi (1003) étant configuré en outre pour : déterminer, pour un sous-slot quelconque, à condition qu'au moins un symbole de la première ressource PUCCH correspondant aux premières UCI dans le sous-slot quelconque chevauche au moins un symbole de la deuxième ressource PUCCH correspondant aux deuxièmes UCI, une troisième ressource PUCCH pour l'envoi des premières UCI et des deuxièmes UCI, la troisième ressource PUCCH pour l'envoi des premières UCI et des deuxièmes UCI occupant le sous-slot quelconque ; et envoyer les premières UCI et les deuxièmes UCI sur la troisième ressource PUCCH déterminée.

10. Appareil selon la revendication 9,
les informations de configuration consistant en une signalisation des couches supérieures, en des informations de contrôle en liaison descendante, notées DCI, ou en un élément de contrôle, noté CE, de la couche de contrôle d'accès au support, notée MAC ; et/ou
le sous-slot consistant en une unité de temps prédéfinie ou configurée avec une quantité fixe de symboles dans un slot, et un ordre de sous-slots au sein du slot, une position de chaque sous-slot, et une quantité de symboles contenus dans chaque sous-slot étant prédéfinis ou configurés ; et/ou
le fait que les première et deuxième ressources PUCCH occupent un sous-slot comprenant :
le fait que les première et deuxième ressources PUCCH ne franchissent pas une limite d'un sous-slot ; ou
le fait que les symboles de début et les symboles de fin des première et deuxième ressources PUCCH occupent un même sous-slot ; ou
le fait qu'une quantité de symboles de la première ressource PUCCH ne dépasse pas une quantité de symboles contenus dans un sous-slot, et qu'une quantité de symboles de la deuxième ressource PUCCH ne dépasse pas une quantité de symboles contenus dans un sous-slot.

11. Appareil selon la revendication 10, à condition que des sous-slots différents contiennent des quantités différentes de symboles, la quantité des symboles de la première ressource PUCCH ne dépassant pas une quantité de symboles contenus dans un sous-slot ayant la plus grande quantité de symboles, et la quantité des symboles de la deuxième ressource PUCCH ne dépassant pas une quantité de symboles contenus dans un sous-slot ayant la plus grande quantité de symboles.

12. Appareil selon la revendication 9, le module d'envoi (1003) étant configuré en outre pour :
envoyer, à condition que la première ressource PUCCH correspondant aux premières UCI ne chevauche pas d'autres canaux en liaison montante dans le domaine temporel, les premières UCI sur la première ressource PUCCH correspondant aux premières UCI.

13. Appareil de réception d'informations de contrôle en liaison montante, notées UCI, comprenant :
un module d'envoi (1101), configuré pour envoyer des informations de configuration, les informations de configuration étant configurées pour indiquer une première ressource de canal physique de contrôle en liaison montante, noté PUCCH, correspondant à des premières UCI et une deuxième ressource PUCCH correspondant à des deuxièmes UCI, les première et deuxième ressources PUCCH occupant un sous-slot, et les premières UCI consistant en un acquittement de demande de répétition automatique hybride, noté HARQ-ACK, et les deuxièmes UCI consistant en des informations d'état de canal, notées CSI, ou en une demande d'ordonnancement, notée SR ; et
un module de réception (1102), configuré pour recevoir les premières UCI et les deuxièmes UCI selon les première et deuxième ressources PUCCH ;
le module de réception (1102) étant configuré en outre pour :
déterminer, pour un sous-slot quelconque, à condition qu'au moins un symbole de la première ressource PUCCH correspondant aux premières UCI dans le sous-slot quelconque chevauche au moins un symbole de la deuxième ressource PUCCH correspondant aux deuxièmes UCI, une troisième ressource PUCCH pour la réception des premières UCI et des deuxièmes UCI, la troisième ressource PUCCH pour la réception des premières UCI et des deuxièmes UCI occupant le sous-slot quelconque ; et recevoir les premières UCI et les deuxièmes UCI sur la troisième ressource PUCCH déterminée.

14. Appareil selon la revendication 13, les informations de configuration consistant en une signalisation des couches supérieures, en des informations de contrôle en liaison descendante, notées DCI, ou en un élément de contrôle, noté CE, de la couche de contrôle d'accès au support, notée MAC ; et/ou
le sous-slot consistant en une unité de temps prédéfinie ou configurée avec une quantité fixe de symboles dans un slot, et un ordre de sous-slots au sein du slot, une position de chaque sous-slot, et une quantité de symboles contenus dans chaque sous-slot étant prédéfinis ou configurés ; et/ou
le fait que les première et deuxième ressources PUCCH occupent un sous-slot comprenant :
le fait que les première et deuxième ressources PUCCH ne franchissent pas une limite d'un sous-slot ; ou
le fait que les symboles de début et les symboles de fin des première et deuxième ressources PUCCH occupent un même sous-slot ; ou
le fait qu'une quantité de symboles de la première ressource PUCCH ne dépasse pas une quantité de symboles contenus dans un sous-slot, et qu'une quantité de symboles de la deuxième ressource PUCCH ne dépasse pas une quantité de symboles contenus dans un sous-slot.

15. Appareil selon la revendication 14, à condition que des sous-slots différents contiennent des quantités différentes de symboles, la quantité des symboles de la première ressource PUCCH ne dépassant pas une quantité de symboles contenus dans un sous-slot ayant la plus grande quantité de symboles, et la quantité des symboles de la deuxième ressource PUCCH ne dépassant pas une quantité de symboles contenus dans un sous-slot ayant la plus grande quantité de symboles.

16. Procédé selon la revendication 13, le module de réception (1102) étant configuré en outre pour :
recevoir, à condition que la première ressource PUCCH correspondant aux premières UCI ne chevauche pas d'autres canaux en liaison montante dans le domaine temporel, les premières UCI sur la première ressource PUCCH correspondant aux premières UCI.
